# EUROPÄISCHE PATENTSCHRIFT

(11) **EP 4 326 954 B1**
(45) Veröffentlichungstag und Bekanntmachung des Hinweises auf die Patenterteilung: **22.04.2026**
(21) Anmeldenummer: 22721269.3
(22) Anmeldetag: 31.03.2022
(51) Int. Cl.: E04B 1/344, E04H 1/12, B65D 90/00, B65D 90/18

(54) **ABROLLCONTAINER, SYSTEM MIT MINDESTENS ZWEI ABROLLCONTAINERN, GERÄTEWAGENSYSTEM UND VERWENDUNG EINES ABROLLCONTAINERS**
ROLL-OFF CONTAINER, SYSTEM COMPRISING AT LEAST TWO ROLL-OFF CONTAINERS, TOOL LORRY SYSTEM AND USE OF A ROLL-OFF CONTAINER
CONTENEUR AMOVIBLE, SYSTÈME COMPRENANT AU MOINS DEUX CONTENEURS AMOVIBLES, SYSTÈME DE CAMION À OUTILS ET UTILISATION D'UN CONTENEUR AMOVIBLE

(30) Priorität: 19.04.2021 DE 102021109824
(43) Veröffentlichungstag der Anmeldung: 28.02.2024
(73) Patentinhaber: R.M.R.H.-Trop's Innovations System GmbH, 56729 Ettringen (DE)
(72) Erfinder: KLEINE-NATROP SEN., Heinz Werner, 56729 Ettringen (DE)
(74) Vertreter: Strauss, Peter
(86) Internationale Anmeldenummer: PCT/DE2022/100249
(87) Internationale Veröffentlichungsnummer: WO 2022/223070

(56) Entgegenhaltungen:
- WO-A1-2015/155695
- CN-Y- 2 203 990
- US-A1- 2008 142 059

## Beschreibung

Es werden ein Abrollcontainer, ein System bestehend aus mindestens zwei Abrollcontainern, ein Gerätewagensystem und die Verwendung eines Abrollcontainers beschrieben.

Container verschiedener Art, wie z.B. der nach US 2008/142059 A1 sind bekannt. Dies US-Schrift offenbart dabei an einem Wohnmobil oder einen Sattelauflieger eine im Wesentlichen klappbare Erweiterung aus faltbaren, starren Paneelen, die im zusammengeklappten Zustand bündig gestapelt sind.

Abrollcontainer werden zu verschiedenen Zwecken eingesetzt, wobei Abrollcontainer von einem Wechselladerfahrzeug aufgenommen, transportiert und wieder abgesetzt werden können und somit das Fahrzeug für weitere Aufgaben zur Verfügung steht. Damit sind das Fahrzeug und der Aufbau nicht miteinander fest verbaut und bilden keine dauerhafte Einheit. Dadurch ergeben sich mehrere Vorteile, wie beispielsweise Verfügbarkeit, Individualisierbarkeit der Container, schnelle Anpassung an Aufgaben/Einsatz, Platzbedarf, etc.

Vor allem im medizinischen Bereich und bei Rettungsdiensten sind solche Abrollcontainer in verschiedenen Ausführungen bekannt und werden beispielsweise bei Feuerwehren, Katastrophenschutz, Sanitätsdiensten und der Bundeswehr eingesetzt.

So muss beispielsweise eine Katastrophenschutzeinheit, die bei einer größeren Schadenslage mit vielen Verletzten oder bei Pandemien, Evakuierungs- und Betreuungslagen tätig wird, am Schadensort oder in direkter Nähe hierzu einen Behandlungs- oder Versorgungsplatz aufbauen. Dies kann, sofern vorhanden, in festen Gebäuden, wie Schulen, Sporthallen, Gemeinschaftshäusern oder ähnlichem geschehen. Sind solche Gebäude nicht vorhanden, wobei dieser Umstand häufig eintritt, werden Zelte verschiedenster Bauarten (z.B. Luft- oder Stangenzelte) aufgebaut und eingerichtet. In den Zelten müssen zusätzlich Lichtleisten verlegt und mit Strom versorgt sowie die Zelte bei Bedarf beheizt werden. Eine Klimatisierung von Zelten ist jedoch nicht möglich, da diese nicht dicht gegenüber ihrer Umgebung gehalten werden können. Eine Klimatisierung wäre daher nur mit einem unverhältnismäßig großen Aufwand möglich. Aus diesem Grund sind beispielsweise solche Zelte für Einsätze im Sommer mit Temperaturen über 40 °C ungeeignet.

Sowohl das medizinische Material als auch die Zelte selbst werden in so genannten Gerätewagen an die Schadensstelle gebracht. Solche Gerätewagen gibt es als LKW mit Ladebordwand oder ohne Ladebordwand, Gerätewagen mit festen Einteilungen oder auch Wechselladerfahrzeuge mit Abrollcontainer, wobei diese Fahrzeuge beispielsweise ein Rollwagensystem mit Rollcontainer besitzen, wie sie aus dem Lebensmitteleinzelhandel bekannt sind. Die Rollcontainer dienen dabei zum Materialtransport. Dabei wird die Beladung nur von einem Standort zum anderen Standort transportiert und am Bestimmungsort aufgebaut. Dies erfordert viel Zeit und zudem ist dann das Fahrzeug für keinen anderen Zweck mehr nutzbar. Leere Fahrzeuge und Abrollcontainer stehen dann herum.

Weiterhin erfordert das Entladen dieser Gerätewagen und der Aufbau des Behandlungsplatzes viel Personal (mindestens 10-12 Helfer) und nimmt viel Zeit in Anspruch. Pro Helfer werden beispielsweise mind. 20-25 Minuten (folglich insgesamt mind. 200 Min. - 300 Min. gesamte Aufbauzeit Helferminuten) benötigt. Je nach Bauart der Gerätewagen kommt noch hinzu, dass bei Gerätewagen mit fest eingerichteten Regalsystemen häufig unten am Fahrzeug eine Trittstufe zum Draufsteigen vorgesehen ist, um die in den oberen Regionen angeordneten Materialen (Kisten) entnehmen zu können. Dabei besteht aber erhöhte Unfallgefahr, vor allem für Personen mit geringer Körpergröße.

Des Weiteren sind die Fahrzeuge für weitere Transporte nicht mehr nutzbar, da diese Fahrzeuge ein festes Regalsystem besitzen. Bei allen bekannten Systemen von Gerätewagen können bei der Entnahme der Materialien die Helferinnen und Helfer bei starken Regenfällen und einem Gewitter extrem behindert und durchnässt werden, wobei dies auch auf zu entnehmende elektrische Geräte und Materialien jeglicher Art zutrifft.

Dabei muss der Aufbau parallel zur Erstversorgung der betroffenen Verletzten oder Erkrankten erfolgen. Durch die bekannten Lösungen wird Personal für den Aufbau eingesetzt, welches beispielsweise eine medizinische Ausbildung als Rettungssanitäter, Rettungsassistent oder Notfallsanitäter aufweist, um Zelte aufzubauen und diese für die Notfallversorgung einzurichten. Gerade diese Helfer werden aber für die medizinische Versorgung der Verletzten, Erkrankten oder der evakuierten Menschen dringend benötigt. Gerade in ländlichen Regionen in Deutschland und Europa ist dies sehr kritisch, weil nicht genügend Helfer für die Versorgung der Verletzten zur Verfügung stehen, beispielsweise in Zeiten von geringen Tagesantrittsstärken von ehrenamtlichen Einheiten und wenn alle Rettungsmittel des öffentlichen Rettungsdienstes voll ausgelastet sind. Auch durch Personalausfälle beim Rettungsdienst, die nicht nachbesetzt werden können, ist das ein sehr großes Problem.

Ferner ist zu beachten, dass, bis der Aufbau erfolgt ist, häufig die kritische Phase, in welcher die Betreuung oder medizinische Versorgung erforderlich ist, vorbei ist. Die bekannten Einrichtungen sind daher auch aus diesem Grund für den Einsatzzweck nicht brauchbar.

So offenbart beispielsweise CH 291 760 A ein transportables Bauwerk für Unterkunfts- und Arbeitszwecke, das aus mehreren Teilen zusammengesetzt ist und erweiternde Bauwerkteile aufweist, wie Seitenwandplatten und Dachteile. Die Dachteile bestehen aus V-förmig mit Scharnier klappbaren Elementen. Das transportable Bauwerk bietet die Möglichkeit, ausgehend von einem transportfähigen Aufbau eines Fahrzeugs einen vergrößerten Raum zur Verfügung zu stellen.

Beim Stand der Technik ist es zudem so, dass der Aufbau im Allgemeinen sehr aufwendig ist und daher viel Zeit benötigt wird. Ferner ist zur Bereitstellung eines Verbunds mehrerer solcher Fahrzeuge ein Schienensystem erforderlich, welches über Stützklötze höhenmäßig einen Ausgleich bereitstellt und eine exakte Anordnung der einzelnen Fahrzeuge zueinander sicherstellt.

Eine Aufgabe einer Ausführungsform der vorliegenden Erfindung kann daher darin gesehen werden eine transportable Einheit zur Verfügung zu stellen, mit der in kurzer Zeit ein erweiterter bzw. erweiterbarer Anwendungsraum bereitgestellt werden kann, der zu unterschiedlichen Einsatzzwecken und Aufgaben einsetzbar ist, wobei auch ein Transport von Material und eine Anpassung an verschiedene Anforderungen möglich ist.

Nach einem Aspekt betrifft eine solche Ausführungsform zumindest nach einem erfindungsgemäßen Kerngedanke einen Abrollcontainer, aufweisend einen Hauptrahmen, der auf einer Plattform angeordnet ist, wobei der Abrollcontainer eine rechteckige Grundfläche und die Plattform an ihrer Unterseite Aufsetzrollen und an einer Stirnseite einen nach oben zeigenden Haken mit Querstrebe aufweist, wobei der Hauptrahmen Boden- , Seiten- und Dachteile aufweist, und wobei am oberen Ende des Hauptrahmens zu beiden Längsseiten jeweils eine mindestens zweiteilige Dachstruktur drehbar gelagert ist, wobei die Dachstruktur mindestens zwei drehbargelagertes Dachrahmenteile aufweist, deren Breite der Höhe der Seitenwände des Hauptrahmens und deren Länge der Länge des Hauptrahmens entspricht, wobei ein erstes Dachrahmenteil am Hauptrahmen und ein zweites Dachrahmenteil am ersten Dachrahmenteil (122) drehgelagert ist, wobei das erste Dachrahmenteil über mindestens ein erstes Antriebselement und das zweite Dachrahmenteil mit dem ersten Dachrahmenteil sowie über mindestens ein zweites Antriebselement verlagerbar sind, wobei an Seitenstreben des Hauptrahmens jeweils zu beiden Seiten an einem vorderen Ende und einem hinteren Ende des Hauptrahmens Seitenrahmen drehbar gelagert sind, wobei die Seitenrahmen, ausgehend von der Anbindungsstelle am Hauptrahmen, eine zum Ende hin abfallende Höhe aufweisen, wobei die Seitenrahmen über jeweils mindestens ein drittes Antriebselement rotierbar sind, wobei über die drehbar gelagerten Seitenrahmen und die Dachstruktur eine Vergrößerung der Grundfläche des Abrollcontainers in einer Gebrauchsstellung bereitstellbar ist und wobei die drehbar gelagerten Seitenrahmen und die Dachstruktur ferngesteuert verlagerbar sind.

Der Aufbau des Abrollcontainers zeichnet sich dadurch aus, dass der Innenraum dessen nicht von Bestandteilen zur Vergrößerung des über den Hauptrahmen aufgespannten Innenraums beschränkt ist, wenn sich die Dachrahmenteile und die Seitenrahmen in einer Nichtgebrauchsstellung befinden, wobei die Seitenrahmen parallel zueinander an den entsprechenden Seiten des Hauptrahmens anliegen und nach außen hin dazu parallel die Dachrahmenteile parallel zueinander und parallel zu den Seiten des Hauptrahmens an den Seitenrahmen angeordnet sind.

Über die Antriebselemente erfolgt dabei ausgehend von der Nichtgebrauchsstellung eine definierte Verlagerung, wobei zuerst die Dachrahmenteile rotiert werden. Hierbei erfolgt zuerst ein Verschwenken des ersten Dachrahmenteils und anschließend ein weiteres gemeinsames Verschwenken sowohl der beiden Dachrahmenteile zueinander als auch des ersten Dachrahmenteils, bis diese die Gebrauchsstellung eingenommen haben.

Zeitversetzt erfolgt ein Rotieren der beiden Seitenrahmen an den jeweiligen Seiten über die entsprechenden Antriebselemente, wobei zuerst der Seitenrahmen rotiert wird, welcher von außen an dem anderen Seitenrahmen parallel hierzu anliegt. Nach einer Verlagerung dieses ersten Seitenrahmens erfolgt zeitversetzt auch ein Rotieren des zweiten Seitenrahmens, bis beide Seitenrahmen ihre Gebrauchsstellung eingenommen haben und im Wesentlichen orthogonal zur Seitenfläche des Hauptrahmens ausgerichtet und angeordnet sind. Dabei liegen dann auf den Oberseiten der Seitenrahmen die Dachrahmenteile auf. Damit kann bei gleichzeitiger Verlagerung der Dachrahmenteile und der Seitenrahmen zu beiden Seiten des Hauptrahmens eine 5-fache Vergrößerung des über den Hauptrahmen aufgespannten Innenraums erfolgen.

Es ist aber auch möglich, nur auf einer Seite des Hauptrahmens die entsprechenden Dachrahmenteile und die Seitenrahmen zu rotieren, wobei in etwa eine 3-fache Vergrößerung des aufgespannten Raums bereitgestellt wird. Auch in einer solchen Gebrauchsstellung ragen die Dachrahmenteile und die Seitenrahmen auf der nicht geöffneten Seite nicht in den Innenraum des Hauptrahmens, so dass auch dieser für verschiedenen Zwecke vollständig zur Verfügung steht.

In der Nichtgebrauchsstellung, wobei die Seitenrahmen und die Dachrahmenteilen zu den beiden Seiten des Hauptrahmens an diesem anliegen, können in dem Innenraum des Hauptrahmens Materialien jedweder Art transportiert werden, welche dann in der Gebrauchsstellung benötigt werden (z.B. zur Behandlung von Verletzten etc.).

Die Seitenrahmen können je nach Ausführung verschiedene Längen aufweisen, wobei grundsätzlich die Seitenrahmen einen oberen Auflageabschnitt aufweisen, welcher so lang ist wie die Länge der Dachstruktur in der Gebrauchsstellung ausgehend vom Hauptrahmen.

Bei weiteren Ausführungen, wobei beispielsweise die Dachstruktur mehrteilig ist und beispielsweise drei, vier oder mehrere Dachrahmenteile aufweist, welche z.B. eine der Höhe der Seitenwände des Hauptrahmens entsprechende Breite aufweisen, entspricht die Länge der Seitenrahmen in der Gebrauchsstellung der Gesamtbreite aller Dachrahmenteile. Dabei sind die Dachrahmenteile über Scharniere und Antriebe miteinander verbunden und aus der Nichtgebrauchsstellung in die Gebrauchsstellung und umgekehrt verbringbar. Die Seitenrahmen können ebenfalls über Scharniere und zusätzliche Antriebe verlagerbar sein. Damit wird erreicht, dass die Seitenrahmen in der Nichtgebrauchsstellung nicht vom Hauptrahmen abstehen und eine kompakte Ausführung gegeben ist. In derartigen Ausführungen kann nochmal eine deutliche Vergrößerung des über den Abrollcontainer in der Gebrauchsstellung bereitgestellten Raums erreicht werden.

Die Antriebselemente können beispielsweise Linearantriebe sein. Linearantriebe umfassen nicht abschließend pneumatische oder hydraulische Linearantriebe und Linearaktuatoren.

Der Aufbau des Abrollcontainers, bestehend aus der Plattform und dem Hauptrahmen mit den daran in der Nichtgebrauchsstellung an den Seiten angeordneten Dachrahmenteilen und den Seitenrahmen, kann so gewählt werden, dass die Anforderungen gemäß DIN 30722 erfüllt werden. So kann weiter sichergestellt werden, dass der Abrollcontainer im verladenen Zustand zusammen mit einem Wechselladerfahrzeug eine Gesamthöhe von 4 m nicht überschreitet. Die Länge des Abrollcontainers und des Hauptrahmens können entsprechend den Anforderungen festgelegt werden. Die Höhe des Hauptrahmens und dessen Länge sind maßgeblich dafür, wie groß der Raum des Hauptrahmens und der über den Hauptrahmen und den Dachrahmenteilen sowie den Seitenrahmen in der Gebrauchsstellung aufgespannte Raum ist.

Vorteilhafterweise kann der aufgespannte Raum vergrößert werden, dies geschieht über eine Fernansteuerung der Antriebselemente, welche dann in der vorgegebenen Reihenfolge die Dachrahmenteile und die Seitenrahmen rotieren. Damit lässt sich der Aufbau in einem Zeitraum von beispielsweise 1 bis 3 Minuten (je nach Ausführung) bewerkstelligen. Ein zeitaufwendiger Aufbau, wie er bei den aus dem Stand der Technik bekannten Systemen vorliegt, kann somit entfallen, wobei keine Schienensysteme oder ausgleichende Stützelemente erforderlich sind.

Ferngesteuert im Sinne der Erfindung bedeutet daher insbesondere, dass ausgehend von einer definierten Hauptrahmengröße unter anderem die Seitenrahmenteile und die Dachrahmenteile derart mechanisch verbunden und angeordnet sind, dass diese ohne manuellen Eingriff, d. h. unter anderem durch eine gezielte elektromechanische Antriebskopplung vermittels Scharniere und Antriebe der einzelnen Rahmenteile so verlagerbar sind, dass der Abrollcontainer auch ohne manuellen Eingriff nach einem definierten Überführungsschema, bei geringem Zeitaufwand auf eine bestimmte oder unterschiedliche Größen der Gebrauchsstellungen überführbar ist.

Die Dachrahmenteile, die Seitenrahmen sowie der Hauptrahmen können an den Außenwänden geschlossen ausgeführt und hierzu beispielsweise mit Wandelementen aus Holz, Kunststoff oder einem Verbundstoff sowie Metallteilen versehen sein und hierüber eine geschlossene Außenfläche sowohl in der Nichtgebrauchs- als auch in der Gebrauchsstellung bilden.

An der freien Kante der zweiten Dachrahmenteile, welche in der Gebrauchsstellung von dem Hauptrahmen beabstandet ist, kann eine Plane angeordnet werden, um auch diese Seite zu verschließen. Die Plane kann dann ferner mit den Seitenrahmen und in weiteren Ausführungen mit einer Fußbodenplane verbunden werden. In der Plane können Fenster und/oder ein Zugang vorgesehen sein. Alternativ können auch feste Wandelemente zwischen die Seitenrahmen eingesetzt und mit dem zweiten Dachrahmenteil sowie einer Fußbodenplane dicht verbunden werden. In alternativen Ausführungen kann eine Plane auch jeweils fest mit der freien Kante der zweiten Dachrahmenteile verbunden sein. Die Plane kann in der Nichtgebrauchsstellung beispielsweise zusammengelegt oder aufgerollt sein (über beispielsweise eine motorisch angetriebene Rolle).

In weiteren Ausführungsformen können
- die ersten Dachrahmenteile und/oder die zweiten Dachrahmenteile an ihren in der Gebrauchsstellung zugewandten Seiten, und/oder
- die ersten Dachrahmenteile und/oder der Hauptrahmen an ihren in der Gebrauchsstellung zugewandten Seiten, und/oder
- die Seitenrahmen und/oder der Hauptrahmen an den Seitenstreben an ihren in der Gebrauchsstellung zugewandten Seiten, und/oder
- die Seitenrahmen und/oder die Dachrahmenteile der Dachstruktur an ihren in der Gebrauchsstellung zugewandten Seiten
jeweils mindestens eine Dichtung aufweisen. Damit wird erreicht, dass über die Rahmenteile ein abgedichteter Raum bereitgestellt werden kann, der bei einem weiteren Schließen der freien Seite dicht ist, sodass auch eine Klimatisierung mit geringem Einsatz von Ressourcen möglich ist. Weiterhin kann hierüber verhindert werden, dass beispielsweise Wind durch Lücken in den aufgespannten Raum eindringt. Die Dichtung selbst kann durch verschiedene Mittel bereitgestellt werden, wobei beispielsweise Kunststoffe oder gummiartige Werkstoffe vorgesehen sein können, die beispielsweise als durchgängige Dichtlippe ausgeführt sind. In weiteren Ausführungen können auch mehrere parallel verlaufende Dichtungssysteme vorgesehen sein, um eine zusätzlich verbesserte Abdichtung zu erreichen.

In weiteren Ausführungsformen können
- die ersten Dachrahmenteile und die zweiten Dachrahmenteile, und/oder
- die ersten Dachrahmenteile und der Hauptrahmen, und/oder
- die Seitenrahmen und der Hauptrahmen an den Seitenstreben jeweils über mindestens ein Scharnier miteinander verbunden sein.

Die Scharniere können hierzu vorzugsweise so ausgebildet sein, dass diese nur ein Rotieren bzw. Verschwenken der entsprechenden Rahmenteile in die gewünschte Richtung und wieder zurück zum Verbringen in die Gebrauchs- und die Nichtgebrauchsstellung ermöglichen. Damit wird verhindert, dass eine Verlagerung über eine Gebrauchsposition hinaus eingenommen werden kann.

In weiteren Ausführungsformen kann unterhalb des Hauptrahmens zu beiden Längsseiten jeweils eine drehbar gelagerte Rolle angeordnet sein, auf welcher eine Fußbodenplane abrollbar aufgewickelt ist. Die Fußbodenplane kann dann in der Gebrauchsstellung abgewickelt werden, wobei hierzu ebenfalls eine motorische Unterstützung vorgesehen sein kann. Hierzu kann beispielsweise ein Elektromotor vorgesehen sein, der die Rolle antreibt. Somit lässt sich auch ein Aufwickeln der Rolle ohne großen Aufwand erreichen.

In weiteren Ausführungsformen kann die Fußbodenplane im abgerollten Zustand in der Gebrauchsstellung mit der Unterseite der Seitenrahmen verbindbar sein. Die Fußbodenplane kann mit den Seitenrahmen verbunden werden, sodass hierüber auch im Bereich des Bodens eine Abdichtung erzielt und der Raum gegenüber der Umgebung abgeschirmt wird.

In weiteren Ausführungsformen kann an den Unterseiten der Seitenrahmen jeweils eine nach unten ragende Plane angeordnet oder damit verbindbar vorgesehen ist, wobei die Plane an ihrer Unterseite einen Abschnitt aufweist, der als Wulst ausgebildet sein kann und der befüllbar ist, um Unebenheiten gegenüber einem Untergrund auszugleichen, abzudichten und den Abrollcontainer zusätzlich zur Sicherung zu beschweren.

In weiteren Ausführungsformen kann der Hauptrahmen an den Längsseiten jeweils einen Überstand aufweisen, an dessen Unterseite mindestens eine Dichtung angeordnet ist, die in der Gebrauchsstellung an dem jeweiligen ersten Dachrahmenteil anliegt. Der Überstand stellt ein Dachelement dar, welcher im Wesentlichen soweit von dem Hauptrahmen absteht, wie die Seitenrahmen und die Dachrahmenteile in der Nichtgebrauchsstellung.

In weiteren Ausführungsformen können an den Seitenrahmen Stützen vorgesehen sein, die zum Abstützen der Seitenrahmen vorgesehen und in ihrer Länge veränderbar sind. Die Stützen können beispielsweise motorisch oder manuell ausgefahren werden. Die Stützen befinden sich vorzugsweise am äußersten Ende der Seitenrahmen in der Gebrauchsstellung. In weiteren Ausführungsformen können auch zwischen dem äußersten Punkt der Seitenrahmen und dem Hauptrahmen weitere Stützen an den Seitenrahmen vorgesehen sein.

Ferner können am Hauptrahmen, je nach Einsatzzweck bzw. Belastung als Ersatz oder in Ergänzung zu den Seitenrahmenstützen, in Richtung zu den Seitenrahmen links und rechts sowie vertikal (in Richtung Boden) hydraulisch ausfahrbare Bodenstützen vorgesehen sein, wodurch die Stütz- bzw. Standbreite vergrößerbar ist und der Abrollcontainer eine größere Stabilität, insbesondere eine verbesserte Kippstabilität in Richtung Seitenrahmen erhält.

In weiteren Ausführungsformen kann der Abrollcontainer eine Versorgungseinheit, die Komponenten zur Energieversorgung, Klimatisierung und Heizung aufweist, und eine Kontaktschnittstelle zur externen Energie-, Informations-, Stoff- und Wasserzufuhr sowie Gase aufweisen. Damit lässt sich der Abrollcontainer autark betreiben und beispielsweise während des Aufbaus und des Abbaus über ein in Verbindung stehendes Wechselladerfahrzeug mit Energie, Wasser etc. versorgen.

In weiteren Ausführungsformen können die Dachrahmenteile an ihren freien Seiten jeweils Befestigungsmittel aufweisen, über welche Seitenwände und/oder Verbindungselemente angebracht werden können.

In weiteren Ausführungsformen können im Hauptrahmen, in den Seitenrahmen und/oder Dachrahmenteilen Versorgungsleitungen zur Energieversorgung, Kommunikation und/oder Stoffversorgung angeordnet sein.

In weiteren Ausführungsformen können an der Plattform und/oder am Hauptrahmen Stützen angeordnet sein, die über mindestens ein viertes Antriebselement zur Verbreiterung der Auflage des Abrollcontainers ausfahrbar oder rotierbar sind. Die Stützen erstrecken sich dann in der ausgefahrenen Stellung an ihrer Unter- und/oder Oberseite auf dem Niveau der Plattform, so dass die Plattform seitliche Auflagestützen aufweist und damit die Auflage verbreitet wird. Hierüber lässt sich ein Verkippen des Abrollcontainers insbesondere auch bei ungünstigen Witterungsbedingungen (z.B. Wind) oder ungünstigen Bodenverhältnissen (z.B. unebener Untergrund) sowie während des Aufbaus (z.B. beim Verschwenken der Seitenrahmen) abstützen.

In weiteren Ausführungsformen kann der Abrollcontainer eine Steuerungseinheit aufweisen, die mit den Antriebselementen über Mittel zum Betätigen der Antriebselemente verbunden ist, wobei die Steuerungseinheit eine Schnittstelle zur ferngesteuerten Bedienung der verstellbaren Seitenrahmen und Dachrahmenteile aufweist.

Dabei kann in weiteren Ausführungsformen die Schnittstelle eine kontaktlose Schnittstelle oder eine Schnittstelle mit einem physischen Kontakt sein. Somit kann beispielsweise über ein Smartphone mit einer zugehörigen App der Aufbau und Abbau des Abrollcontainers bzw. ein Verschwenken der Seitenrahmen und der Dachrahmenteile gesteuert werden. Über die Schnittstelle können auch Systemdaten des Abrollcontainers bzw. der daran angeschlossenen und/oder integrierten Einheiten sowie von weiteren Einheiten, wie beispielsweise eines Vorratstagspeichers für Wasser, Flüssigkeiten, Gase etc. und/oder beispielsweise der Ladezustand eines Energiespeichers des Abrollcontainers abgerufen werden. Ferner können über eine solche Schnittstelle und eine entsprechende Software beispielsweise eine Klimaeinrichtung und/oder die Beleuchtung des Abrollcontainers geregelt werden.

Die vorstehend genannte Aufgabe wird auch durch ein System bestehend aus mindestens zwei Abrollcontainern gemäß den vorstehend beschriebenen Ausführungen gelöst, wobei zwischen den mindestens zwei Abrollcontainern eine Verbindungsplane angeordnet ist, welche mit korrespondierenden Seiten der Dachrahmenteile verbindbar ist, wobei die Verbindungsplane eine den entsprechenden Dachrahmenteilen entsprechende Länge und eine über die Länge sich verändernde Breite aufweist, so dass in einer parallelen Anordnung der Dachrahmenteile der mindestens zwei Abrollcontainer eine Regenrinne über die Verbindungsplane bereitgestellt ist.

Es lassen sich mehrere Abrollcontainer miteinander verbinden, wobei hier an den entsprechenden Seitenrahmen Seitenverbindungselemente und an den Bodenplanen Bodenverbindungselemente angebracht werden können. In weiteren Ausführungen kann auch eine Fußbodenplane eines Abrollcontainers oder die Fußbodenplanen zweier miteinander zu verbindender Abrollcontainer können miteinander verbunden werden. Über die Verbindungsplane wird dann von oben sowohl eine Verbindung von zwei Abrollcontainern in der Gebrauchsstellung als auch eine Regenrinne bereitgestellt, so dass Regenwasser sich nicht im Verbindungsbereich der beiden Abrollcontainer sammeln kann, sondern abgeführt wird.

Um eine definierte Ausbildung der Verbindungsplane in der Gebrauchsstellung als Regenrinne sicherzustellen, können in regelmäßigen Abständen an der Verbindungsplane Verbindungselemente, wie z.B. Seile, Kederschienen oder dergleichen, vorgesehen sein, welche die beiden Längsseiten der Verbindungsplane miteinander verbinden. Dabei sind die Verbindungselemente über die Länge der Verbindungsplane gleich lang, aber kürzer als die Breite der Verbindungsplane an ihrer breitesten Stelle. Damit wird eine rinnenartige Ausbildung bei einem definierten Abstand zwischen zwei Abrollcontainern sichergestellt.

Es können mehrere Abrollcontainer über weitere Verbindungsplanen und andere Verbindungselemente (wie z.B. Planen, Wandelemente, Bodenplanen oder -elemente, etc.) verbunden werden, so dass ein beliebig großer Raum bereitgestellt werden kann.

Nach einem weiteren Aspekt betrifft eine erfindungsgemäße Ausführungsform ferner auch ein Gerätewagensystem, aufweisend ein Wechselladerfahrzeug und einen Abrollcontainer gemäß einer der vorstehend beschriebenen Ausführungen.

Das Wechselladerfahrzeug und ein Abrollcontainer bilden dabei eine Einheit. Die Einheit wird je nach Anforderung und Aufgaben an einen Bestimmungsort verbracht, wobei dort das Abladen des Abrollcontainers, wie für solche Container üblich, erfolgt. Dabei kann über eine Verbindungsleitung während des Abladens oder nach dem Abladen eine elektrische Verbindung und/oder eine Verbindung über einen Hydraulik- oder Druckluftschlauch bestehen. Somit kann dann mittels der Versorgung über das Wechselladerfahrzeug die benötigte Energie zum Aufbauen bereitgestellt werden. Nach dem automatischen Aufbauen des Abrollcontainers kann die Verbindung gekappt werden und die weitere Versorgung erfolgt über die Versorgungseinheiten und Versorgungsmodule des Abrollcontainers. Es ist in weiteren Ausführungsformen weiterhin möglich, dass die Versorgung mit den benötigten Mitteln zum Auf- und Abbauen auch durch die Versorgungseinheiten des Abrollcontainers erfolgt, so dass hierfür kein Wechselladerfahrzeug benötigt wird, und/oder dass auch während des Betriebs bzw. der Nutzung des Abrollcontainers eine Versorgung über eine Wechselladerfahrzeug erfolgt.

In weiteren Ausführungen kann der Abrollcontainer auch mit lokal vorhandenen Versorgungssystemen (Strom, Wasser, Abwasser, Druckluft, etc.) verbunden werden.

Nach einem weiteren Aspekt betrifft eine weitere erfindungsgemäße Ausführungsform auch eine Verwendung eines Abrollcontainers gemäß einer der vorstehend beschriebenen Ausführungen als Transportmittel, Behandlungscontainer, Intensivstation, mobile Impfstationen, Unfallhilfsstelle, Evakuierungsstation, Isolierstation, Intensivstation, Küche, Versorgungsstation, Beobachtungsstation, Unterkunft und/oder Verbandsplatz gelöst. Ferner können Einsatzbereiche sein: Im Feuerwehrbereich, bei der Dekontamination und al Funkeinsatzzentrale.

Weitere Vorteile, Merkmale und Ausgestaltungsmöglichkeiten ergeben sich aus der nachfolgenden Figurenbeschreibung von nicht einschränkend zu verstehenden Ausführungsbeispielen.

In den Zeichnungen zeigen:
- Fig. 1, 2: perspektivische Darstellungen eines erfindungsgemäßen Abrollcontainers in einer Nichtgebrauchsstellung;
- Fig. 3-6: verschiedene Ansichten des erfindungsgemäßen Abrollcontainers;
- Fig. 7-11: Bestandteile des erfindungsgemäßen Abrollcontainers;
- Fig. 12: eine perspektivische Darstellung des erfindungsgemäßen Abrollcontainers in einer Gebrauchsstellung;
- Fig. 13, 14: verschiedene Ansichten des erfindungsgemäßen Abrollcontainers in der Gebrauchsstellung von Fig. 12;
- Fig. 15-21: Zustände von Bestandteilen des erfindungsgemäßen Abrollcontainers beim Verbringen aus der Nichtgebrauchsstellung in die Gebrauchsstellung und umgekehrt, und
- Fig. 22: eine perspektivische Darstellung eines Abrollcontainers einer weiteren Ausführungsform in einer Gebrauchsstellung;
- Fig. 23: eine Seitenansicht zum Abrollcontainer mit ausgefahrenen Stützen;
- Fig. 24: eine Seitenansicht zum Abrollcontainer mit eingefahrenen Stützen.

In den Zeichnungen mit gleichen Bezugszeichen versehene Elemente entsprechen im Wesentlichen einander, sofern nichts anderes angegeben ist. Darüber hinaus wird darauf verzichtet, Bestandteile zu zeigen und zu beschreiben, welche nicht wesentlich zum Verständnis der hierin offenbarten technischen Lehre sind. Im Weiteren werden nicht für alle bereits eingeführten und dargestellten Elemente die Bezugszeichen wiederholt, sofern die Elemente selbst und deren Funktion bereits beschrieben wurden.

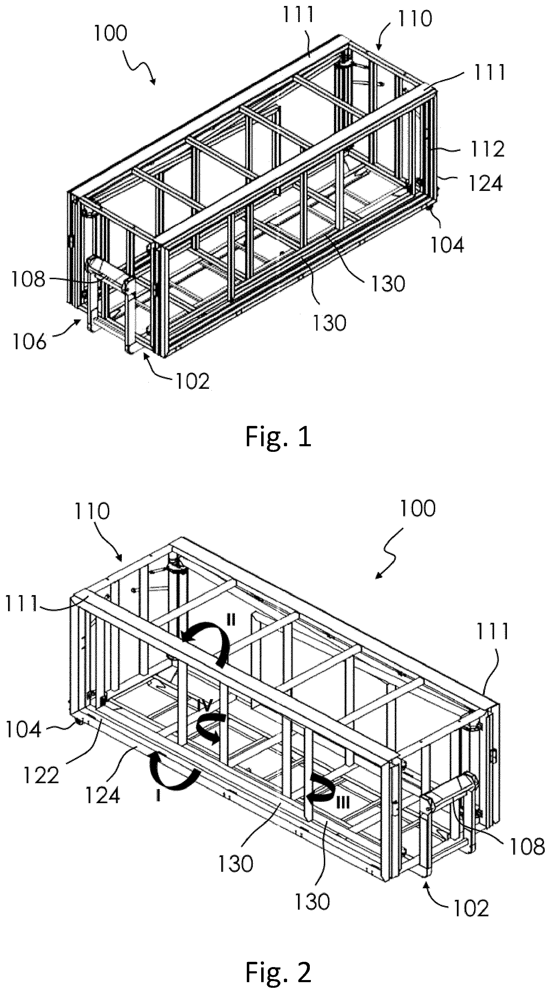

Mit Bezug auf die Fig. 1-21 wird ein Ausführungsbeispiel eines erfindungsgemäßen Abrollcontainers 100 beschrieben.

Der Abrollcontainer 100 kann dabei für verschiedene Einsatzzwecke verwendet werden und entsprechende Ausgestaltungen aufweisen. Ferner kann der Abrollcontainer 100 in der in Fig. 1 gezeigten Nichtgebrauchsstellung mit entsprechenden Komponenten, Geräten und Gegenständen beladen sein, die nach dem Verbringen des Abrollcontainers 100 in die Gebrauchsstellung aus dem Abrollcontainer 100 entnommen werden können.

Der Abrollcontainer 100 ist in dem gezeigten Ausführungsbeispiel Teil eines "Rolling Multi Rescue Health Systems" (R.M.R.H. System), wobei die Erfindung nicht darauf beschränkt ist. Dabei handelt es sich um ein neues Konzept für die Materialbevorratung, den Materialtransport, sowie den Aufbau und Betrieb eines Behandlungsplatzes bei größeren und großen Lagen des Katastrophenschutzes, und zwar nicht nur für die medizinische Versorgung von Verletzten und Erkrankten, sondern auch für die Betreuung und die Versorgung von unverletzten und nicht erkrankten Betroffenen, aber auch für den feuerwehrtechnischen Dienst, wie bereits beschrieben.

Der Abrollcontainer 100 ist in dem gezeigten Ausführungsbeispiel ein Rettungscontainer, der über ein Wechsellader-Fahrzeug (in den Fig. nicht gezeigt) transportiert werden kann. Das Wechsellader-Fahrzeug kann auch Teil des R.M.R.H. Systems sein. Für das hierin beschriebene Konzept können grundsätzlich Wechsellader-Fahrzeuge verwendet werden, wie sie aus dem Stand der Technik bekannt sind.

Die Vorteile des neuen Systems bestehen beispielsweise darin, dass der Abrollcontainer 100 Versorgungsmaterial für Verletzte bringen kann, aber nach dem Entladen gleichzeitig einen Behandlungsplatz darstellt.

Die Fig. 1 und 2 zeigen jeweils perspektivische Darstellungen eines erfindungsgemäßen Abrollcontainers 100 in einer Nichtgebrauchsstellung.

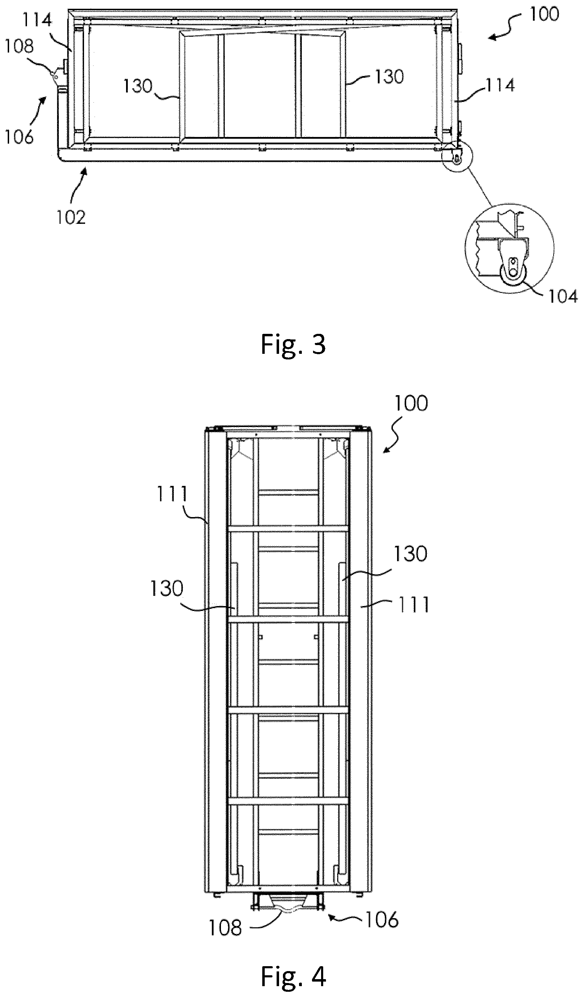

Der Abrollcontainer 100 weist eine Plattform 102 auf. Die Plattform 102 bildet die Basis für den Abrollcontainer 100 und weist hierzu an der vorderen Stirnseite des Abrollcontainers 100 und einen Haken 106 mit einer Querstrebe 108 auf, über welche der Abrollcontainer 100 über die Plattform 102 von einem Wechsellader-Fahrzeug aufgenommen und abgesetzt werden kann. An der Plattform 102 sind im hinteren Bereich, der Stirnseite mit dem Haken 106 abgewandt, Aufsetzrollen 104 (siehe Fig. 3) angeordnet und drehbar gelagert um das Abstellen und Aufnehmen zu erleichtern.

Auf der Plattform 102 ist ein Hauptrahmen 110 angeordnet. Der Hauptrahmen 110 besteht aus Streben und Verbindungsteilen, die eine Bodenfläche, Seitenwände und ein Dach ausbilden. In den Figuren ist nur die Grundstruktur gezeigt, jedoch ist es vorgesehen, dass beispielsweise die Flächen und Wände in der geforderten Weise verkleidet und verschlossen sind.

An den beiden Längsseiten des Hauptrahmens 110 befindet sich eine Dachstruktur 120 mit zwei Dachrahmenteilen 122 und 124, die über Scharniere 126, 128 sowie Hydraulikzylinder 121, 123 relativ zueinander sowie relativ zum Hauptrahmen 110 verlagerbar sind. Zusätzlich sind Seitenrahmen 130 vorgesehen, die über Scharniere 116, 117 und Hydraulikzylinder 132 an Seitenstreben 114 des Hauptrahmens 110 verlagerbar angeordnet sind.

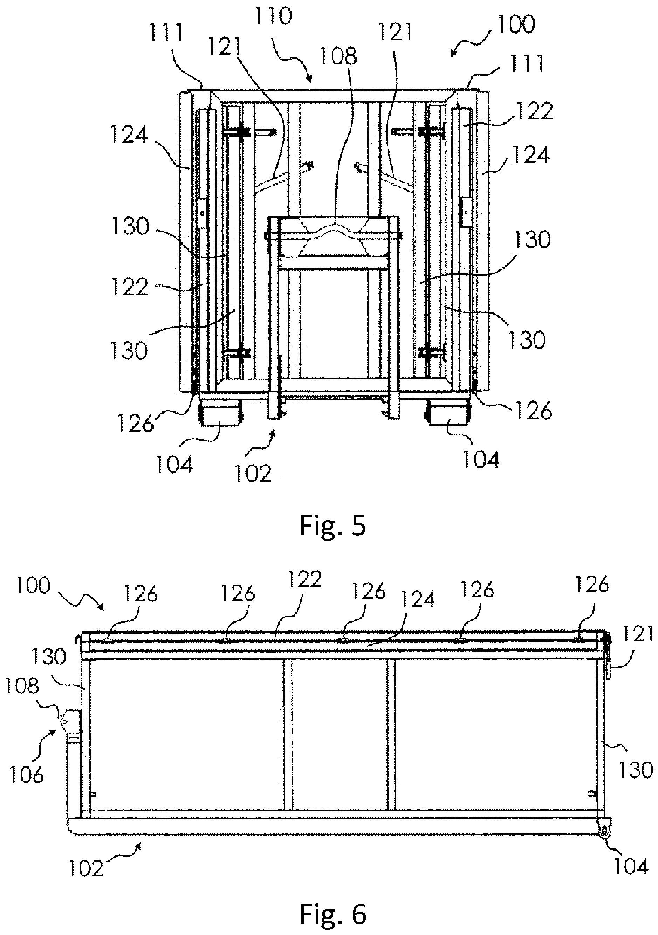

Wie in Fig. 5 gezeigt, stehen in der Nichtgebrauchsstellung die Dachrahmenteile 122, 124 von den Seitenwänden des Hauptrahmens 110 ab. Daher sind am Hauptrahmen 110 Überstände 111 an den Seiten vorgesehen, welche die abstehenden Teile in der Nichtgebrauchsstellung überdecken.

Die Bestandteile der Plattform 102 und des Hauptrahmens 110 bestehen aus einem Metall bzw. einer Metalllegierung und können beispielsweise aus Profilkörpern gefertigt werden. Für den Hauptrahmen 110 sind insbesondere Profile und Materialien zu wählen, die bei geringem Gewicht hohe Belastungen aushalten, damit eine stabile Ausführung des Hauptrahmens 110 und somit des Abrollcontainers 100 erreicht wird.

Die Fig. 3-6 zeigen verschiedene Ansichten des erfindungsgemäßen Abrollcontainers 100. In Fig. 3 ist gezeigt, dass die Seitenrahmen 130 in der Nichtgebrauchsstellung parallel zueinander und parallel zu den Seitenwänden des Hauptrahmens 110 verlaufen, wobei die Länge der Seitenrahmen 130 in der gezeigten Ausführungsform jeweils geringer ist als die Länge der Seitenwände des Hauptrahmens 110.

In Fig. 4 ist gezeigt, dass zumindest die Seitenrahmen 130 in der Nichtgebrauchsstellung teilweise in den Innenraum des Hauptrahmens 110 ragen, wobei der Innenraum des Hauptrahmens 110 im Wesentlichen freibleibt und damit in der Nichtgebrauchsstellung u.a. z.B. als Lagerfläche zum Transport verschiedenster Materialien und Gegenstände verwendet werden kann.

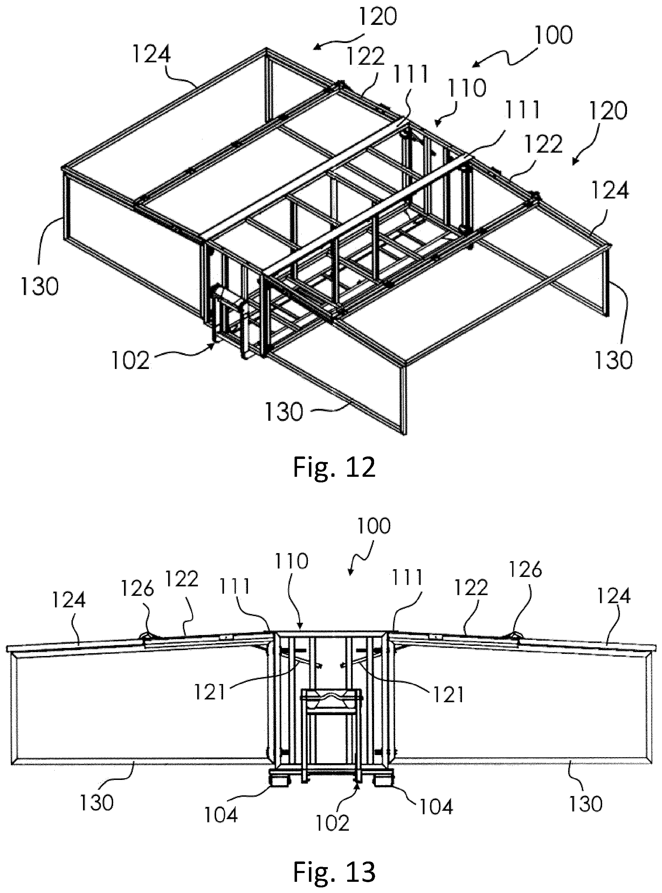

Fig. 5 zeigt den Blick auf die vordere Stirnseite des Abrollcontainers 100, wobei insbesondere die Anordnung der Dachstruktur 120 mit den Dachrahmenteilen 122, 124 sowie der Seitenrahmen 130 in der Nichtgebrauchsstellung gezeigt sind. Zusätzlich sind Hydraulikzylinder 121 dargestellt, welche zum Rotieren der Dachstruktur 120 mit den Dachrahmenteilen 122, 124 aus der in Fig. 5 gezeigten Nichtgebrauchsstellung in die in Fig. 12 gezeigte Gebrauchsstellung dienen.

Fig. 6 zeigt eine Seitenansicht des Abrollcontainers 100 in der Gebrauchsstellung, wobei sowohl die Dachrahmenteile 122, 124 als auch die Seitenrahmen 130 entsprechend verlagert sind, wie insbesondere aus Fig. 12 ersichtlich.

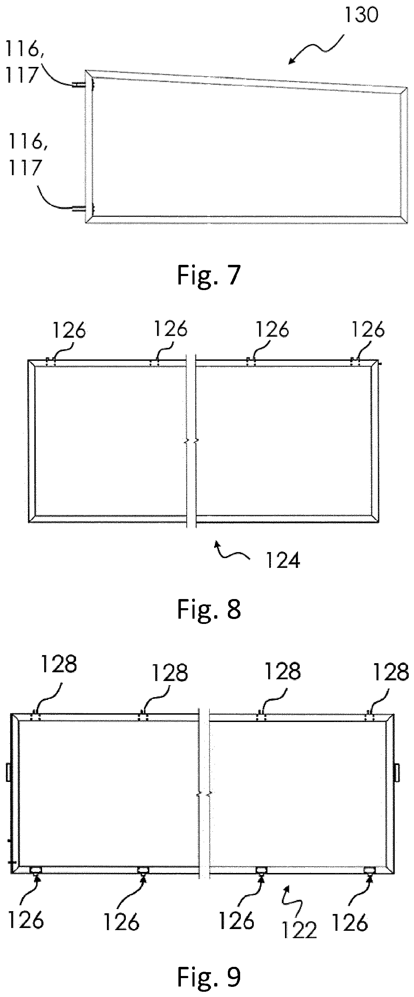

Die Fig. 7-11 zeigen Bestandteile des erfindungsgemäßen Abrollcontainers 100.

Fig. 7 zeigt einen Seitenrahmen 130 mit Teilen von Scharnieren 116, 117 zum Befestigen an den Seitenstreben 114 des Hauptrahmens 110.

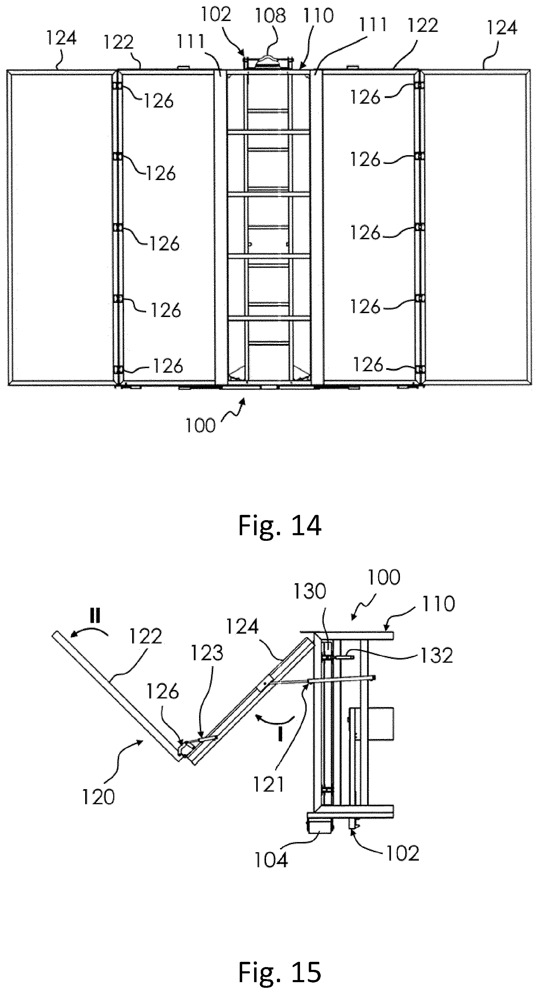

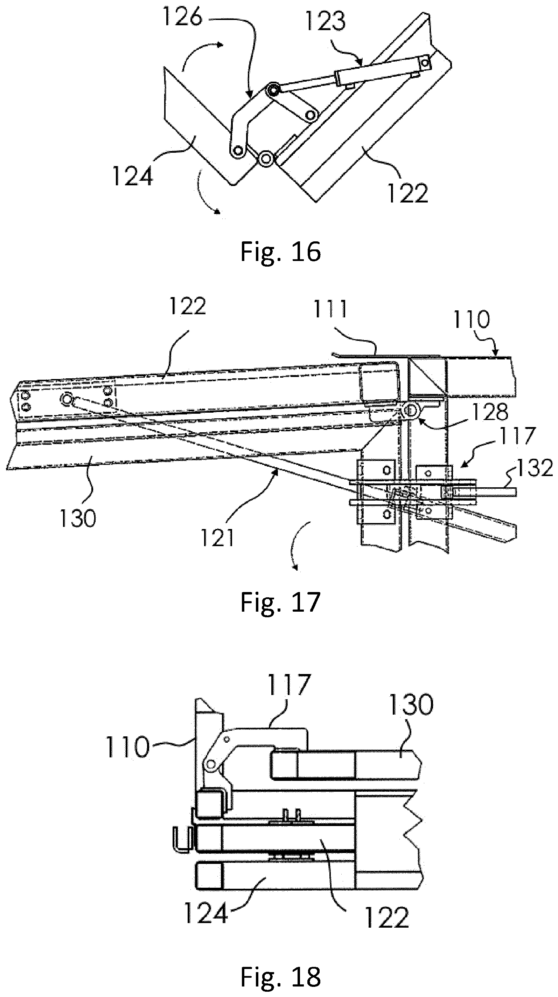

Fig. 8 zeigt ein zweites Dachrahmenteil 124, dass über Teile der gezeigten Scharniere 126 mit einem ersten Dachrahmenteil 122 verbindbar ist. Über den abstehenden Stift (an der rechten oberen Seite) erfolgt die Kopplung mit einem Hydraulikzylinder 123, wie in Fig. 15 und 16 im Detail dargestellt.

Fig. 9 zeigt ein erstes Dachrahmenteil 122, das über korrespondierende Teile der gezeigten Scharniere 126 mit dem in Fig. 8 gezeigten zweiten Dachrahmenteil 124 verbindbar ist. Zusätzlich sind die ersten Dachrahmenteile 128 jeweils an einer Längsseite des Hauptrahmens 110 über Teile der gezeigten Scharniere 128 mit dem Hauptrahmen 110 verbindbar. Die seitlich abstehenden Stifte dienen dabei zur Kopplung über einen Hydraulikzylinder 123, wie in Fig. 15 und 16 im Detail dargestellt.

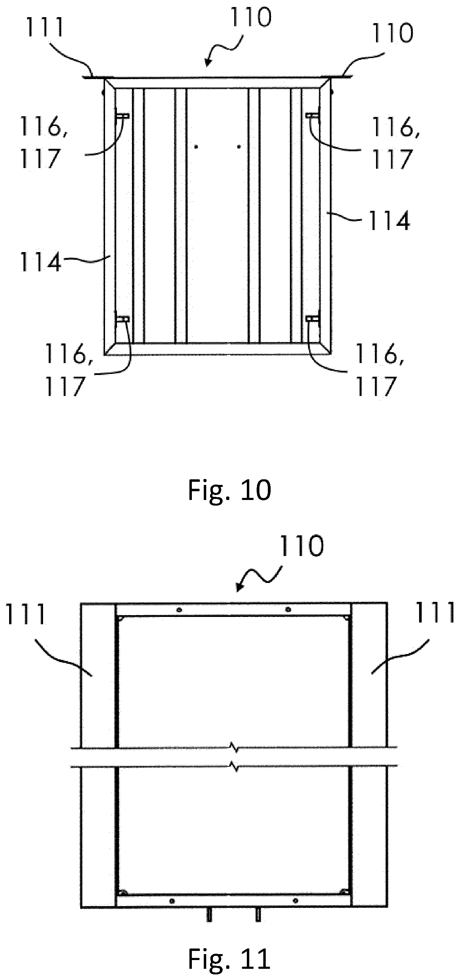

Fig. 10 zeigt einen Blick auf den Hauptrahmen 110 ohne die Seitenrahmen 130 und die Dachstruktur 120 zu beiden Seiten des Hauptrahmens 110.

Fig. 11 zeigt den Blick von oben auf den Hauptrahmen 110 gemäß der Darstellung von Fig. 10.

Fig. 12 zeigt eine perspektivische Darstellung des erfindungsgemäßen Abrollcontainers 100 in einer Gebrauchsstellung. In der gezeigten Gebrauchsstellung sind zu beiden Längsseiten des Hauptrahmens 110 sowohl die Dachstrukturen 120 als auch die Seitenrahmen 130 verlagert worden. Somit überspannt der Abrollcontainer 100 in der Gebrauchsstellung eine im Wesentlichen fünfmal so große Fläche wie in der Nichtgebrauchsstellung.

Die Fig. 13, 14 zeigen verschiedene Ansichten des erfindungsgemäßen Abrollcontainers 100 in der Gebrauchsstellung von Fig. 12.

Fig. 13 zeigt, wie die Seitenrahmen 130 zu beiden Längsseiten des Hauptrahmens 110 orthogonal vom Hauptrahmen 110 abstehen und die Dachstruktur 120 (siehe auch Fig. 12, 15 u. 22) mit den beiden Dachrahmenteilen 122 und 124 auf den Oberseiten der Seitenrahmen 130 aufliegt. Durch die Ausbildung der Seitenrahmen 130 wird eine geneigte Oberfläche über die Dachstruktur 120 (siehe auch Fig. 12, 15 u. 22) bereitgestellt, welche ein Abfließen von Regen erleichtert.

Fig. 14 zeigt eine Draufsicht auf den Abrollcontainer 100 in der Gebrauchsstellung.

Die Fig. 15-21 zeigen Zustände von Bestandteilen des erfindungsgemäßen Abrollcontainers 100 beim Verbringen aus der Nichtgebrauchsstellung in die Gebrauchsstellung und umgekehrt.

In Fig. 15 ist die Ausbildung der Verbindung zwischen der Dachstruktur 120 über das erste Dachrahmenteil 122 und die Verbindung zwischen den Dachrahmenteilen 122 und 124 gezeigt.

Fig. 16 zeigt eine vergrößerte Darstellung der Ausbildung der Verbindungsstelle zwischen dem ersten Dachrahmenteil 122 und dem zweiten Dachrahmenteil 124.

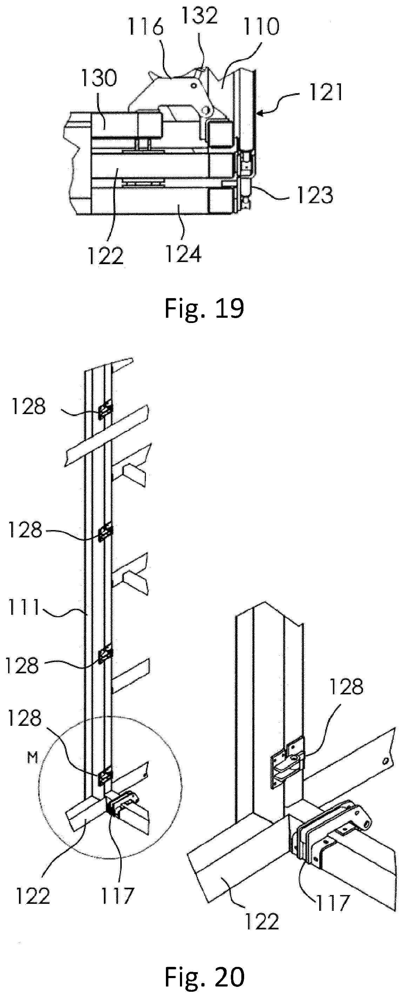

Die ersten Dachrahmenteile 122 sind über die Scharniere 128 mit dem Hauptrahmen 110 verdrehbar verbunden (siehe Fig. 17, 20). An dem Hauptrahmen 110 sind jeweils Hydraulikzylinder 121 angeordnet, die mit den ersten Dachrahmenteilen 122, wie in Fig. 15 und 16 gezeigt, am anderen Ende verbunden sind. Eine Betätigung der Hydraulikzylinder 121 bewirkt daher entweder ein Verbringen der ersten Dachrahmenteile 122 in die Gebrauchsstellung (Richtung I) oder in die Nichtgebrauchsstellung (Entgegen Richtung I).

An den ersten Dachrahmenteilen 122 sind weitere Hydraulikzylinder 123 angeordnet, welche über die gezeigte Hebelanordnung mit den zweiten Dachrahmenteilen 124 verbunden sind. Eine Betätigung dieser Hydraulikzylinder 123 bewirkt daher entweder ein Verbringen der zweiten Dachrahmenteile 124 in die Gebrauchsstellung (Richtung II) oder in die Nichtgebrauchsstellung (Entgegenrichtung II). Die ersten und zweiten Dachrahmenteile 122 und 124 sind über die Scharniere 126 verdrehbar miteinander verbunden.

Wie insbesondere in Fig. 17 gezeigt, sind die Seitenrahmen 130 über Hydraulikzylinder 132 aus der Nichtgebrauchsstellung in die Gebrauchsstellung (Richtung III für den vorderen Seitenrahmen 130 und Richtung IV für den hintenliegenden Seitenrahmen 130) und umgekehrt (entsprechende Gegenrichtungen) verbringbar, wobei die Hydraulikzylinder 132 sowohl mit dem Hauptrahmen 110 als auch mit den Seitenrahmen 130 verbunden sind. Die Ausbildung der Scharniere 116, 117 für die Seitenrahmen 130 an den jeweiligen Seiten des Hauptrahmens 110 ist in den Fig. 18 und 19 gezeigt.

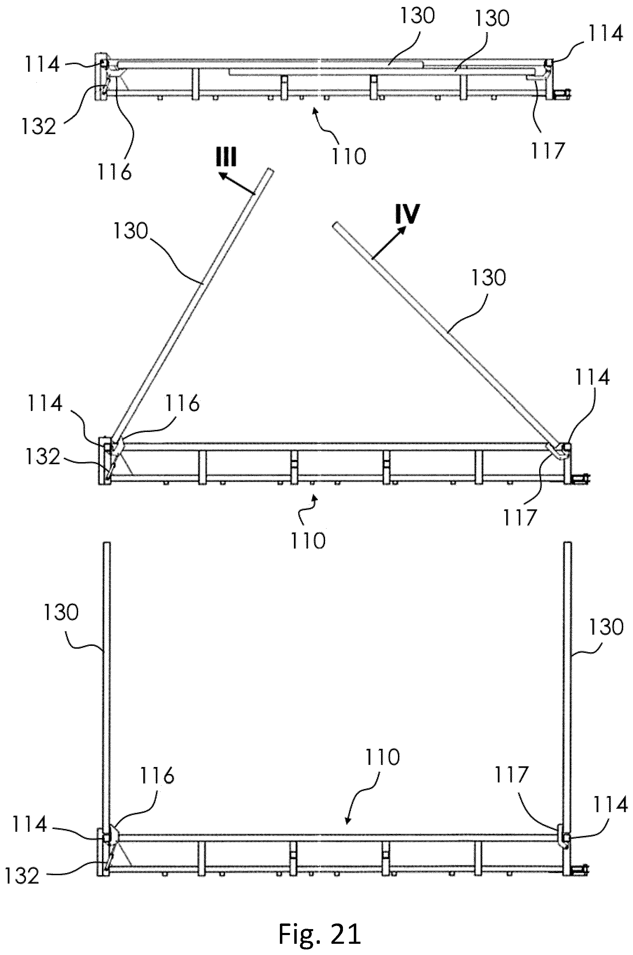

Fig. 21 zeigt den Bewegungsablauf zum Verbringen der Seitenrahmen 130 ausgehend von der oben gezeigten Nichtgebrauchsstellung in die unten gezeigte Gebrauchsstellung. Dabei erfolgt ein versetztes Verlagern der beiden Seitenrahmen 130 an den entsprechenden Seiten des Hauptrahmens 110, damit diese sich beim Einfahren und Ausfahren nicht behindern.

Wesentlich beim Verbringen in die Gebrauchsstellung ist zudem, dass zuerst die Dachstruktur 120 (siehe auch Fig. 12, 15 u. 22) in die Gebrauchsstellung verbracht wird, wobei hierbei zuerst das erste Dachrahmenteil 122 in Richtung I rotiert wird, bevor auch das zweiten Dachrahmenteil 124 relativ zum ersten Dachrahmenteil 122 in Richtung II rotiert wird. Beim Verbringen aus der Gebrauchsstellung in die Nichtgebrauchsstellung erfolgt der Ablauf umgekehrt.

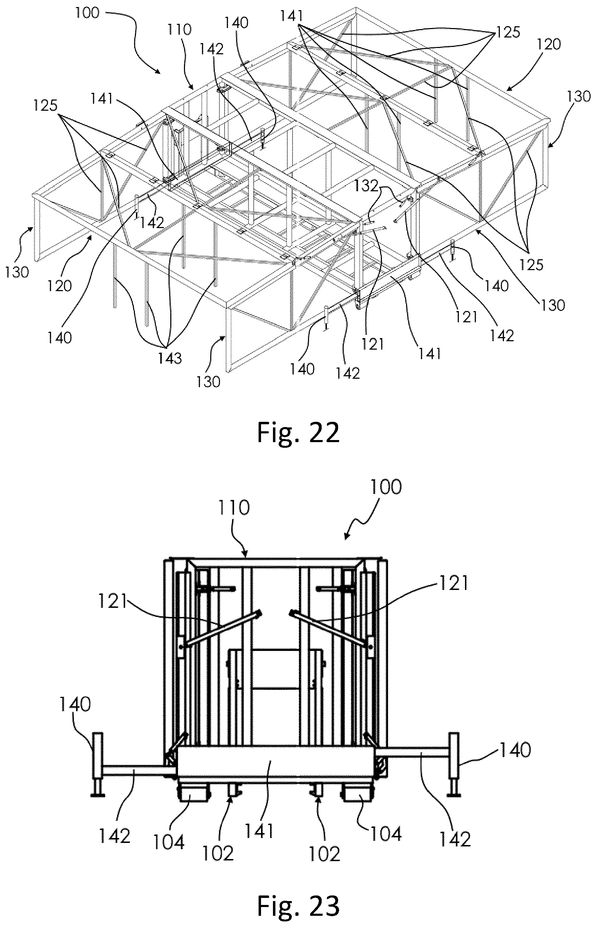

Fig. 22 zeigt eine perspektivische Darstellung eines Abrollcontainers 100 einer weiteren Ausführungsform in einer Gebrauchsstellung. Der Abrollcontainer 100 von Fig. 22 unterscheidet sich von dem anderen Ausführungsbeispiel dadurch, dass zum einen die Seitenrahmen 130 und die Dachrahmenteile 122, 124 (siehe oben) der Dachstruktur 120 diagonal und senkrecht verlaufende Querstreben 125 aufweisen, so dass der Abrollcontainer 100 noch verwindungsstabiler wird. Die Querstreben 125 können dabei aus dem gleichen Material wie die Seitenrahmen 130 und die Dachstruktur 120 bestehen. Vorzugsweise kann es dabei auch um Profilkörper bzw. -schienen handeln.

Zum anderen unterscheidet sich die Ausführungsform von Fig. 22 weiter dadurch, dass an der Plattform 102 seitlich ausfahrbare Stützen 140 vorgesehen sind. Die Stützen 140 sind an der Stirnseite und an der gegenüberliegenden Seite angeordnet und über weitere Antriebselemente ausfahrbar. Bei den Antriebselementen kann es sich bspw. um hydraulische Antriebselemente handeln, wie für die anderen Antriebselemente beschrieben.

Fig. 22 zeigt die ausgefahrene Position der Stützen 140 in der Gebrauchsstellung. In der Nichtgebrauchsstellung sind die Stützen 140 eingefahren und können hierzu bspw. entlang ihrer Längserstreckung unterhalb des Hauptrahmens 110 verlaufen oder rotiert werden, wobei dann die Stützen 140 unterhalb oder oberhalb der Seiten des Hauptrahmens 110 liegen.

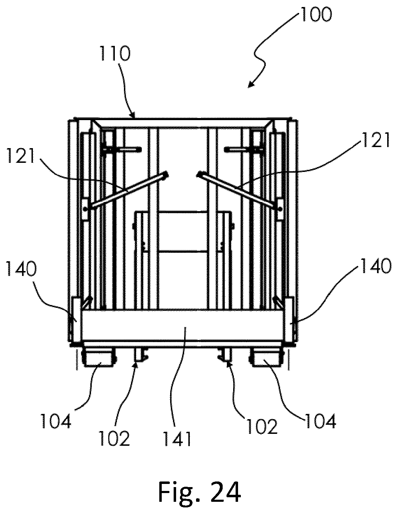

Nach der Ausführungsform gemäß Fig. 22 sowie Fig. 23 und 24 sind für die Stützen 140 Stützenaufnahmen 141 vorgesehen, die außenseitig entlang des Seitenrahmens 130 verlaufen. In die Stützenaufnahme 141 können die Stützen 140 zumindest in Bezug auf ihre Führungsschienen 142 vermittels zum Beispiel eines Linearmotors eingeschoben werden, nachdem sie aus der Gebrauchs-/Stützstellung angehoben wurden. Sie befinden sich dann in Anlagestellung zur Stützenaufnahme 141.

Zum funktionsgemäßen Gebrauch können die Stützen 140 zum Beispiel als teleskopartig ausfahrbare Hydraulikstützen oder dergleichen ausgebildet sein, deren Antrieb oder zumindest Teile davon auch in der Stützenaufnahme 141 untergebracht werden kann.

Dabei erfolgt die Ansteuerung über die Steuerung für den Abrollcontainer 100. Somit können auch die Stützen 140 automatisch in ihre Gebrauchsstellung ohne menschliche Unterstützung verbracht werden.

Weiterhin kann hierzu die Steuerung so ausgebildet sein, dass vor dem Aufklappen der Dachstruktur 120 und dem Rotieren der Seitenrahmen 130 oder zusammen mit dem Aufklappen der Dachstruktur 120 die Stützen 140 ausgefahren werden. Vorzugsweise erfolgt zuerst das Ausfahren der Stützen 140, damit es zu keinem Verkippen des Abrollcontainers 100 während des Aufbaus kommen kann.

Das Ausfahren der beiden Stützen 140 am vorderen und am hinteren Ende des Abrollcontainers 100 bewirkt, dass der Abrollcontainer 100 zusätzlich zur Standfläche über die beiden Kufen der Plattform 102 eine breitere Auflage aufweist. Damit kann der Abrollcontainer 100 sicher aufgestellt werden. Eine entsprechende Situation ist aus Fig. 23 zu entnehmen.

Es wird somit verhindert, dass der Abrollcontainer 100 beim Aufklappen/Verschwenken der Seitenrahmen 130 - je nach Einsatzbedingungen und Witterung - um die Höhe zwischen dem Boden und der Unterseite der Seitenrahmen 130 (z.B. ca. 0.30 m) kippen kann. Hierzu fahren nach dem Absetzten des Abrollcontainers 100 sofort vorn und auch hinten nach rechts und links die Stützen 140 seitlich aus. Diese haben dann den gleichen Bodenkontakt wie die Kufen in der Mitte der Plattform 102. Ein "Hochbocken" des Abrollcontainers 100 wird dabei aber nicht erreicht. Es erfolgt lediglich eine breitere Abstützung.

Die Stützen 140 können direkt an der Plattform 102, unterhalb des Hauptrahmens 110 oder an beiden angeordnet sein (siehe hierzu auch oben). Wesentlich ist, dass die Stützen 140 in der ausgefahrenen Stellung sich im Wesentlich in der gleichen Ebene befinden wie die Kufen der Plattform 102.

Des Weiteren können erfindungsgemäß ergänzende Stützstreben 143 vorgesehen sein. Die Stützstreben dienen insbesondere dazu den Rollcontainer 100 auf besondere Dachlasten vorzubereiten. Diese besonderen Dachlasten können zum Beispiel bei starkem Schneefall, Sturm oder sonstige extremen Wetterlagen bzw. Situationen entstehen.

Die Stützstreben 143 können an der Dachstruktur 120 zum Beispiel aus- oder herunterklappbar ausgebildet sein und gleichsam mit dem Aufbau der Dachstruktur 120 bereitgestellt, d. h. abgeklappt und soweit erforderlich ausgefahren werden. Alternativ können die Stützstreben 143 natürlich auch separat mit dem Abrollcontainer 100 lose mitgeführt werden und bei Bedarf an der Dachstruktur und den dort verlaufenden Verstrebungen befestigt, zum Beispiel eingehakt und/oder verschraubt werden. Die Stützstreben 143 können zum Abstützen auf dem Untergrund ausfahrbar bzw. verlängerbar, zum Beispiel teleskopierbar ausgeführt sein.

Wesentlich ist bei der Ausführung des Abrollcontainers 100, dass die Hydraulikzylinder 121, 123, 132 über eine Steuerung angesteuert werden, die über eine Schnittstelle Steuerbefehle erhält. Die Schnittstelle kann eine Anbindung an eine Bedieneinheit über ein Kabel oder über Funk umfassen. So kann beispielsweise über ein Smartphone mit einer entsprechenden App das Verbringen in die (Nicht-)Gebrauchsstellung gesteuert werden. Die dazu benötigen Komponenten, wie beispielsweise ein Motor etc., sind in einem Antriebsabteil des Abrollcontainers enthalten. Darin kann ebenfalls eine Energieversorgungseinheit vorgesehen sein.

Damit kann der Abrollcontainer 100 in sehr kurzer Zeit, z.B. innerhalb von ca. 3 Minuten, zu einem voll verschlossenen und witterungsgeschützten Bereich aufgeklappt werden und steht dann für verschiedene Nutzungsarten zur Verfügung.

Der Abrollcontainer 100 des R.M.R.H. Systems ist so konstruiert, dass dieser beispielsweise mit einer Fernbedienung oder einer App von nur 1 Person aufgestellt werden kann. Nach dem Absetzten des Abrollcontainers 100 baut nur eine Person dieses System in einer Zeit von unter ca. 3 Minuten ohne menschliche Unterstützung komplett zu einem großen Behandlungsplatz/Raum von beispielsweise über 81 m² auf. Der Raum kann dann beispielsweise für 16 bis 18 Patienten mit genormten Tragen, oder aber mit 12 Krankenhausbetten, bestückt werden.

Der Abrollcontainer 100 kann nicht nur als Behandlungsraum, sondern auch z.B. als Intensiveinheit, Betreuungseinheit, Kücheneinheit, Einsatzleitstelle, Pandemiestation, Dekontaminationseinheit und für vieles mehr eingesetzt werden.

Der Abrollcontainer 100 kann beispielsweise die Abmaße eines Normcontainers mit einer Breite von 2,55 m, einer Höhe von ca. 2,50 m und einer beliebigen Länge zwischen 6,90 m und 7,50 m aufweisen. Die Gesamthöhe hängt von dem verwendeten Trägerfahrzeug ab. Die Gesamthöhe (Fahrzeug und Container 100) sollte dabei 4,00 m nicht überschreiten.

Der Abrollcontainer 100 kann allein mittels einer Fernbedienung oder Smartphone-App abgesetzt werden. Somit wird gegenüber bekannten Container- und Zeltversorgungssystemen sowie Stangen- und Luftzelten eine enorme Zeitverbesserung im präklinischen Katastrophenschutz, z.B. bei Terrorlagen, wobei ein schneller Aufbau unabdingbar ist, erreicht. Dies wird zudem dadurch erreicht, dass der Abrollcontainer 100 feste isolierte Seitenwände und ein isoliertes Dach aufweisen kann. Dort können z.B. Airliner-Schienen fest verbaut vorgesehen werden, an denen unterschiedliche Gegenstände mit z.B. Gurten oder anderen Halteeinrichtungen befestigbar sind.

In der Nichtgebrauchsstellung wird ein rechteckiger Container bereitgestellt, der genormte Abmaße aufweist und zusätzlich mit Rollwägen etc. bestückt werden kann, wobei durch das neuartige Klappsystem die Seitenwände geöffnet werden können.

Mit dem neuartigen Klappsystem wird erreicht, dass aufgrund der platzsparenden Anordnung der Dachstruktur 120 und der Seitenrahmen 130 in dem Hauptrahmen 110 sowie aufgrund der Scharniere 116, 117, 126, 128 und dem Hydrauliksystem mit den Hydraulikzylindern 121, 123, 132 aus einer Containerfläche innerhalb kürzester Zeit (ca. 3 Minuten) mit nur einer Bedienperson die Fläche des Grundcontainers auf die 5-fache Größe erweitern kann, ohne Muskelkraft und Zeitaufwand.

An den Längsseiten des Abrollcontainers 100 befindet sich jeweils das Doppelrahmensystem mit den Seitenrahmen 130 und der Dachstruktur 120, wobei über ein Hydrauliksystem mit einer Fernbedienung oder Smartphone-App zuerst ein Ausklappen der ersten Dachrahmenteile 122 und dann ein gleichzeitiges Rotieren der ersten Dachrahmenteile 122 und der zweiten Dachrahmenteile 124 erfolgt. Gleichzeitig dichten dann die Dachrahmenteile 122 und 124 an den Berührungsstellen automatisch ab. Hierzu können alle Kontaktflächen der Rahmenteile des Abrollcontainers 100 Dichtungselemente aufweisen, die in der Gebrauchsstellung eine Abdichtung bereitstellen.

Die beweglichen Teile des Abrollcontainers 100 können gemeinsam oder nur auf einer Seite des Abrollcontainers 100 verlagert werden.

Bei dem Abrollcontainer 100 werden durch zwei Hydraulikzylinder 121 die Dachstrukturen 120 seitlich zum Hauptrahmen 110 nach oben gedrückt (aufgeklappt), wobei die innere Dachfläche entsteht. Gleichzeitig oder zeitversetzt können auch die Hydraulikzylinder 123 synchron angesteuert werden, wodurch das (Öffnungs-)Scharnier 126 die Dachrahmenteile 122, 124 aufdrückt.

Die Scharniere 126 öffnen synchron bzw. klappen die zweiten Dachrahmenteile auf und diese werden nach oben gedrückt (Fig. 15, 16).

Auf beiden Seiten des Hauptrahmens 110 ist somit ein Scherenklappsystem vorhanden, das zur Vergrößerung der Dachfläche eingesetzt wird.

Dieses Dach ist zweimal so breit, wie die Höhe des Abrollcontainers 100 bzw. des Hauptrahmens 110. Die ausgeklappten Dächer haben einen Neigungswinkel im Bereich von 80 bis 89, vorzugsweise 87 Grad, so dass im geöffneten Zustand Regenwasser sehr gut abfließen kann. An allen Rahmenteilen können Anschlagkanten vorgesehen und mit Dichtungen verarbeitet sein, so dass die Rahmenteile abgedichtet werden können.

Nachdem nun das Dach des Abrollcontainers 100 in der Gebrauchsstellung vollgeständig geöffnet ist, werden zuerst die Seitenrahmen 130 in Längsrichtung des Abrollcontainers 100, die in der Nichtgebrauchsstellung im Wesentlichen verdeckt eingebaut sind (siehe Fig. 5) mittels der Hydraulikzylinder 132 aufgedrückt. Gleichzeitig öffnen sich in gleicher Weise gering zeitversetzt auch der jeweilige zweite Seitenrahmen 130 an den jeweiligen Längsseiten des Hauptrahmens 110, die in Längsrichtung nach innen versetzt eingebaut bzw. in der Nichtgebrauchsstellung angeordnet sind. Die Seitenrahmen 130 können sich aufgrund der Ausbildung der Scharniere 116, 117 in den Endstellungen selbst arretieren.

Der Aufbau und die Ansteuerung der Hydraulikzylinder 121, 123, 132 oder anderer Antriebseinheiten in weiteren Ausführungen ermöglichen, dass innerhalb kürzester Zeit (beispielsweise unter 3 Minuten) eine Raumvergrößerung von 1:5 herbeigeführt werden kann.

Aufgrund der Ausbildung der Bestandteile des Abrollcontainers 100 schließen die Seitenrahmen 130 mit dem Hauptrahmen 110 am Dach (bzw. an der Dachstruktur 120) sowie auch am senkrechten Rahmen an den Seitenstreben 114 dicht ab.

Über die Ausbildung des Abrollcontainers 100 mit den über die Scharniere 116, 117, 126, 128 verlagerbaren Komponenten kann je Seite beispielsweise eine Nutzfläche von über 32 m² bereitgestellt werden, wobei die Scharniere 116, 117, 126, 128 und Antriebselemente nicht in den Raum ragen. Dies trifft sowohl für die Gebrauchsstellung als auch für die Nichtgebrauchsstellung zu, so dass damit eine maximale Beladung und Ausnutzung der kompletten Fläche bzw. des gesamten Raums des Abrollcontainers erfolgen kann.

Durch die neuartige Konstruktion entsteht somit in einer Zeit von unter 3 Minuten ein kompletter, voll abgeschlossener Behandlungsraum mit festen isolierten Seitenwänden und Dachflächen. Die im Inneren des Abrollcontainers 100 mitgeführten Materialien stehen somit bei jeder Witterung (Regen, Sturm, Hagel, etc.) schnell und trocken für alle Beteiligten zur Verfügung.

An den geöffneten Seitenrahmen 130 können auch noch in den Rahmen an den Außenecken eine Ausgleichsstütze oder eine zusätzliche Halte- und Stabilisierungsstütze eingebaut werden, welche hydraulisch oder mechanisch verstellbar ist. Auch solche Stützen können über die Steuerung angesteuert und damit automatisch verlagert werden. Über die Stützen kann dem Abrollcontainer 100 ein zusätzlicher Halt gegen ein Kippen in Schräglagen geben werden.

Bei dem Abrollcontainer 100 kann je nach Bedarf auch nur eine Seite geöffnet werden, wobei der Raum innerhalb des Hauptrahmens 110 trotzdem zur Behandlung etc. zur Verfügung steht und die geschlossene Seite fest verschlossen und abgedichtet ist.

Das Hydrauliksystem des R.M.R.H. Systems bzw. der Abrollcontainers 100 kann beispielsweise zwei Hydraulikpumpen aufweisen und eine Spannungsversorgung von 24 Volt bereitstellen. Hierzu sind entsprechende Einrichtungen in einem abgetrennten Bereich des Abrollcontainers 100, beispielsweise im Bereich der Stirnseite, vorgesehen. Für jede Seite des Abrollcontainers 100 kann eine Hydraulikpumpe vorgesehen sein. Sofern eine Hydraulikpumpe oder eine Steuerung hierfür einer Seite ausfallen, kann über die jeweils andere Hydraulikpumpe/Steuerung ein Öffnen und Schließen durchgeführt werden. Hierzu ist ein Umstellsystem eingebaut. Die Stromversorgung kann in der Anfangsphase vom Wechsellader-Fahrzeug (Träger) über eine 24 Volt-Steckdose bereitgestellt werden. Somit werden die Stromversorgung und der Betrieb (Aufbau) des Abrollcontainers 100 immer gewährleistet, da der Träger solange Strom liefert, solange dieser in Betrieb ist. In weiteren Ausführungen kann die Stromversorgung für den Abrollcontainer 100 über einen internen eigenen Energiespeicher oder eine Steckdose bereitgestellt werden, die an ein vor Ort vorhandenes Stromnetz angeschlossen wird.

Der Abrollcontainer 100 kann in weiteren Ausführungen ein eigenes Heizungs-, Klimatisierungs- und Notstromversorgungsystem aufweisen, das im vorstehend beschriebenen Fall auch eine Notstromversorgungsystem für die Hydraulikanlage bereitstellen kann. Eine weitere Einspeisung mit Strom kann aber auch durch eine externe Stromeinspeisung über eine am Abrollcontainer 100 verbaute Steckdose erfolgen. Die externe Stromversorgung kann über ein vorhandenes Stromnetz oder über ein Notstromaggregat erfolgen.

Für eine Abdichtung in der Gebrauchsstellung gegenüber dem Boden können an den Seitenrahmen 130 jeweils an der Außenseite eine Plane mit einem Wulst befestigt sein, welcher beispielsweise mit Luft, mit Wasser oder mit Sand befüllt werden kann. Damit kann auch ein Ausgleich von eventuellen Bodenunebenheiten erreicht werden. Der Wulst kann aus einem LKW-Planen-Stoff hergestellt und in der gezeigten Ausführungsform des Abrollbehälters 100 beispielsweise mit 1500 Liter insgesamt gefüllt werden. Damit kann beispielsweise eine noch nicht verschlossene Lücke von ca. 0,30 unter den Seitenrahmen 130 bis zum Boden hin verschlossen werden, wobei gleichzeitig der Abrollcontainer 100 um 1,5 Tonnen beschwert wird. Durch das Füllen können auch Bodenunebenheiten (z.B. Bordsteinkanten) verschlossen bzw. ausgeglichen werden. Damit wird erreicht, dass der schon durch die Bauart bedingte Abrollcontainer 100 in der gezeigten Ausführungsform mit einem Eigengewicht von über 4 Tonnen zusätzlich noch schwerer gemacht werden kann, wobei das zusätzliche Gewicht nicht mittransportiert werden muss. Der Abrollcontainer 100 kann daher in der Gebrauchsstellung bis zu einer Windstärke von 8 aufgestellt werden.

An den vorderen Bereichen der zweiten Dachrahmenteile 124, welche den ersten Dachrahmenteilen 122 in der Gebrauchsstellung gegenüberliegen, können in weiteren Ausführungen Planen (z.B. LKW-Planen) mit z.B. einer Kederschiene befestigt sein. Diese Planen dienen erstens als Verschluss-Plane des kompletten Abrollcontainers 100 und können in der Gebrauchsstellung als Seitenwand auf der Längsseite dienen. Ferner können diese Planen ebenfalls mit einem Wulst versehen werden und können auch mit Luft, Wasser oder Sand oder einem ähnlichen Material befüllt werden, wobei in der Mitte der Seitenwand der Eingangsbereich vorgesehen sein kann.

An diesen Planen können Kederschiene befestigt sein.

Wenn mehrere R.M.R.H. Systeme bzw. Abrollcontainer 100 miteinander auf der Längsseite verbunden werden sollen, kann auf der Längsseite die komplette Seitenwand mit dem Wulst über die Anbindung mit der Kederschiene abgenommen und durch ein Verbindungsstück ersetzt werden.

Da an jeder Seite Kederschienen befestigt sein können, lassen sich die Planen und Verbindungsstücke leicht einfädeln. Diese Verbindungsstücke sind so gearbeitet, dass sie nicht über die komplette Länge hinweg gleich breit sind, sondern unterschiedlich, wodurch erreicht wird, dass das Verbindungsstück als Dachplane fungiert, die nach einer Seite hin wie eine Regenrinne wirkt. Die Anordnung kann je nach Wunsch auf beiden Seiten des Verbindungsstücks einen Ablauf bereitstellen. Das Verbindungsstück kann nach der Ausbildung der Regenrinne seitlich nach unten verlaufen und die Seitenrahmen 130 bis hin zum Boden verschließen.

Damit lassen sich über ein solches Verbindungsstück beispielsweise zwei Abrollcontainer 100 in der Gebrauchsstellung miteinander verbinden, wobei eine zusätzliche Vergrößerung des Raums erreicht wird. Beispielsweise kann bei der Ausgestaltung von Abrollcontainern 100 gemäß der gezeigten Ausführungsform zweimal die Fläche von 81,5 m² also eine Gesamtfläche von ca. 163 m² Raum bzw. Behandlungsfläche bereitgestellt werden. Hierzu müssen zunächst zwei Abrollcontainer 100 nebeneinander aufgestellt werden.

Für die universelle Einsetzbarkeit und eine optionale Klimatisierung kann das System bzw. der Abrollcontainer 100 in weiteren Ausführungen einen Fußboden besitzen. Der Fußboden (z.B. in Form einer Plane) kann sich beispielsweise auf einer Rolle unterhalb des Abrollcontainers 100 befinden. Dieser erstreckt sich von der Aufsetztrolle 104 des Abrollcontainers 100 über die ganze Länge bis zur Stirnseite mit dem Haken 106. Der Fußboden kann so gefertigt sein, dass er an den Seiten doppelt verschweißt ist. Nach dem Ausziehen des Fußbodens auf der Fläche kann die Fußbodenplane mit wenigen Handgriffen an der unteren Seite innen an den Seitenrahmen 130 befestigt werden. Somit wird im Wesentlichen eine Wanne erstellt.

Ist der Abrollcontainer komplett aufgeklappt bzw. aufgestellt, ist innerhalb von max. 5 Minuten ein Behandlungsraum von über 81,5 m² in der gezeigten Ausführungsform bereitgestellt.

Das gezeigte Ausführungsbeispiel nimmt Bezug auf die Verwendungsmöglichkeiten im sanitätsdienstlichen Bereich. Es sind aber auch weitere Verwendungen vorgesehen.

Beispielsweise als Transportfahrzeug, wobei der Abrollcontainer 100 das komplette Material für einen Behandlungsplatz für beispielsweise 50 bis 100 Personen aufnehmen kann.

Somit kann über den Abrollcontainer 100 sofort ein Behandlungsplatz für ca. 50 Verletzte/Erkrankte genutzt werden. Dies erfolgt unabhängig von Untergrund und Wetterbedingungen.

Der Abrollcontainer 100 kann auch als zusätzliche Intensivstation, z.B. bei Pandemien (Corona) verwendet werden. Durch vorinstallierte Anschlüsse (Sauerstoff, Strom 12 Volt, 220 Volt, und Netzwerkkabel, etc.) in den Seitenwänden des Abrollcontainers 100, welche den üblichen Normen und Vorgaben entsprechen, sowie durch die Möglichkeit, medizinische Geräte ordnungsgemäß an den Wänden in Kopfhöhe der Patienten zu befestigen und anzuschließen, können auch Intensivpatienten versorgt werden. Hierzu sind entsprechende Einrichtungen im Inneren des Abrollcontainers 100 insbesondere in der Gebrauchsstellung zugänglich. Hierzu können z.B. Airliner-Schienen senkrecht und/oder waagrecht in den Seitenwänden eingebaut sein.

Der Abrollcontainer 100 kann auch als Unfallhilfsstelle bei Großveranstaltungen, wie z.B. Rock am Ring, Volksfesten, Konzerten, die regelmäßig über mehrere Tage betrieben werden, eingesetzt werden.

Weitere Verwendungsmöglichkeiten umfassen die Verwendung als Evakuierungsstation oder als Isolierstation. Auch eine Verwendung als Zwischenlagerungsstätte bei Klinikbränden oder ähnlichem kann mit dem Abrollcontainer 100 erreicht werden. beispielsweise bei der Evakuierung von MRSA Patienten einer ganzen Station in einer Reha Klinik. Dabei werden die Rettungsfahrzeuge nicht für den Transport der Patienten benötigt und stehen für weitere Aufgaben zur Verfügung.

Weiterhin kann der Abrollcontainer 100 auch als Intensivstation genutzt werden. Der Aufbau erlaubt gegenüber Zelten eine vollständige Desinfizierung.

Schließlich kann der Abrollcontainer 100 auch als Verbandsplatz oder mobile Impfstation genutzt werden.

Weitere Verwendungsmöglichkeiten des R.M.R.H. Systems bzw. des Abrollcontainers 100 im Rahmen des Betreuungsdienstes:

### Ausstattung mit einer kompletten Groß- Küche

Der Abrollcontainer 100 kann statt mit medizinischer Ausrüstung, genauso als Küche eingerichtet werden und steht ebenfalls in kürzester Zeit zur Essenzubereitung und danach auch zur Essensaufnahme durch die Betroffenen zur Verfügung. Alle Hygienevorschriften, die bei der Essenszubereitung und der Ausgabe von Essen zu beachten sind, können in diesem festen und witterungsunabhängigen System wesentlich leichter eingehalten werden als bei einer herkömmlichen "Gulaschkanone" (alte Feldküchen) und der Essensausgabe in Zelten, wobei die Vorgaben der EU-Hygiene-Verordnung eingehalten werden.

### Betreuung:

Auch die Betreuung unverletzter Beteiligter, sowie die Abwicklung der notwendigen Verwaltungsmaßnahmen (Registrierung usw.) können witterungsunabhängig in einem Abrollcontainer 100 erfolgen.

Abrollcontainer 100 können auch mit einer entsprechenden Einrichtung für die Einsatzleitung von Feuerwehr etc. eingesetzt werden.

Beispielsweise kann eine Einrichtung "Gefahrgut" mit Beladung Gefahrstoff und mit einer Dekontaminierungseinrichtung erfolgen, z.B. Duschsysteme. Dabei kann sowohl der Materialtransport der Feuerwehr erfolgen als auch eine Verwendung im ausgeladenen Zustand des Materials als Unterkunft. Es ist auch möglich, beispielsweise den Mittelteil des Abrollcontainers 100 ("Hauptrahmen 110") als Technische Einsatzleitung und Besprechungsraum zu nutzen.

Das beschriebene System mit erfindungsgemäßen Abrollcontainern 100 bietet die Möglichkeit eines schnellen Transports und die Bereitstellung von Raum, wobei gegenüber allen bekannten Systemen von Feuerwehr, Rettungsdienst und Katastrophenschutz eine sehr große Verbesserung, die vor allem eine erhebliche Zeitersparnis bzw. Schnelligkeit einschließt und die aus den vorstehend erläuterten Gründen erreicht wird.

Es ist beispielsweise auch möglich, mittels mehrerer erfindungsgemäßer Abrollcontainer 100 eine komplette ambulante Klinik, z.B. Fieberambulanz, innerhalb kurzer Zeit zur Verfügung zu stellen.

In weiteren Ausführungen sind zusätzliche Ausstattungen vorgesehen, wie beispielsweise zentrale Lüftungs- und Klimatisierungssysteme sowie damit verbundene Leitungen innerhalb der Rahmenteile des Abrollcontainers 100, Versorgungsleitungen und Aufnahmestellen für verschiedene Geräte und Einrichtungen. Zudem können im Inneren des Abrollcontainers 100 im Bereich des Hauptrahmens 110 integrierte Einrichtungen vorgesehen sein, die innerhalb des Hauptrahmens 110 verlagerbar sind, um in der Gebrauchsstellung beispielsweise Möbel oder Behandlungsplätze auszubilden. Es können auch Beleuchtungen für den Innenraum im Hauptrahmen 110 und den seitlichen Räumen in der Gebrauchsstellung sowie an den Außenseiten des Abrollcontainers 100 vorgesehen sein, die ebenfalls, wie die weiteren Einrichtungen auch über eine Smartphone-App ferngesteuert steuerbar sein können.

### Bezugszeichenliste

- 100: Abrollcontainer
- 102: Plattform
- 104: Aufsetzrollen
- 106: Haken
- 108: Querstrebe
- 110: Hauptrahmen
- 111: Überstand
- 114: Seitenstreben
- 116: Scharnier
- 117: Scharnier
- 120: Dachstruktur
- 121: Hydraulikzylinder
- 122: erstes Dachrahmenteil
- 123: Hydraulikzylinder
- 124: zweites Dachrahmenteil
- 125: Querstrebe
- 126: Scharnier
- 128: Scharnier
- 130: Seitenrahmen
- 132: Hydraulikzylinder
- 140: Stütze
- 141: Stützenaufnahme
- 142: Führungsschiene
- 143: Stützstreben

## Patentansprüche

1. Abrollcontainer, aufweisend einen Hauptrahmen (110), der auf einer Plattform (102) angeordnet ist, wobei der Abrollcontainer (100) eine rechteckige Grundfläche und die Plattform (102) an ihrer Unterseite Aufsetzrollen (104) und an einer Stirnseite einen nach oben zeigenden Haken (106) mit Querstrebe (108) aufweist, wobei der Hauptrahmen (110) Boden-, Seiten- und Dachteile aufweist, und wobei am oberen Ende des Hauptrahmens (110) zu beiden Längsseiten jeweils eine mindestens zweiteilige Dachstruktur (120) drehbar gelagert ist, wobei die Dachstruktur (120) mindestens zwei drehbargelagertes Dachrahmenteile (122, 124) aufweist, deren Breite der Höhe der Seitenwände des Hauptrahmens (110) und deren Länge der Länge des Hauptrahmens (110) entspricht, wobei ein erstes Dachrahmenteil (122) am Hauptrahmen (110) und ein zweites Dachrahmenteil (124) am ersten Dachrahmenteil (122) drehgelagert ist, wobei das erste Dachrahmenteil (122) über mindestens ein erstes Antriebselement und das zweite Dachrahmenteil (124) mit dem ersten Dachrahmenteil (122) sowie über mindestens ein zweites Antriebselement verlagerbar sind, wobei an Seitenstreben (114) des Hauptrahmens (110) jeweils zu beiden Seiten an einem vorderen Ende und einem hinteren Ende des Hauptrahmens (110) Seitenrahmen (130) drehbar gelagert sind, wobei die Seitenrahmen (130) ausgehend von der Anbindungsstelle am Hauptrahmen (110) eine zum Ende hin abfallende Höhe aufweisen, wobei die Seitenrahmen (130) über jeweils mindestens ein drittes Antriebselement rotierbar sind, wobei über die drehbar gelagerten Seitenrahmen (130) und die Dachstruktur (120) eine Vergrößerung der Grundfläche des Abrollcontainers (100) in einer Gebrauchsstellung bereitstellbar ist und wobei die drehbar gelagerten Seitenrahmen (130) und die Dachstruktur (120) ferngesteuert verlagerbar sind.

2. Abrollcontainer nach Anspruch 1, wobei
die ersten Dachrahmenteile (122) und/oder die zweiten Dachrahmenteile (124) an ihren in der Gebrauchsstellung zugewandten Seiten, und/oder
die ersten Dachrahmenteile (122) und/oder der Hauptrahmen (110) an ihren in der Gebrauchsstellung zugewandten Seiten, und/oder
die Seitenrahmen (130) und/oder der Hauptrahmen (110) an den Seitenstreben (114) an ihren in der Gebrauchsstellung zugewandten Seiten, und/oder
die Seitenrahmen (130) und/oder die Dachrahmenteile (122, 124) der Dachstruktur (120) an ihren in der Gebrauchsstellung zugewandten Seiten jeweils mindestens eine Dichtung aufweisen.

3. Abrollcontainer nach Anspruch 1 oder 2, wobei
die ersten Dachrahmenteile (122) und die zweiten Dachrahmenteile (124), und/oder
die ersten Dachrahmenteile (122) und der Hauptrahmen (110), und/oder
die Seitenrahmen (130) und der Hauptrahmen (110) an den Seitenstreben (114) jeweils über mindestens ein Scharnier (116, 117, 126, 128) miteinander verbunden sind.

4. Abrollcontainer nach einem der Ansprüche 1 bis 3, wobei unterhalb des Hauptrahmens (110) zu beiden Längsseiten jeweils eine drehbar gelagerte Rolle angeordnet ist, auf welcher eine Fußbodenplane abrollbar aufgewickelt ist.

5. Abrollcontainer nach Anspruch 4, wobei die Fußbodenplane im abgerollten Zustand in der Gebrauchsstellung mit der Unterseite der Seitenrahmen (130) verbindbar ist.

6. Abrollcontainer nach einem der Ansprüche 1 bis 5, wobei an den Unterseiten der Seitenrahmen (130) jeweils eine nach unten ragende Plane angeordnet oder damit verbindbar vorgesehen ist, wobei die Plane an ihrer Unterseite einen Abschnitt aufweist, der befüllbar ist, um Unebenheiten gegenüber einem Untergrund auszugleichen, abzudichten und den Abrollcontainer (100) zusätzlich zur Sicherung zu beschweren.

7. Abrollcontainer nach einem der Ansprüche 1 bis 6, wobei der Hauptrahmen (110) an den Längsseiten jeweils einen Überstand (111) aufweist, an dessen Unterseite mindestens eine Dichtung angeordnet ist, die in der Gebrauchsstellung an dem jeweiligen ersten Dachrahmenteil (122) anliegt.

8. Abrollcontainer nach einem der Ansprüche 1 bis 7, wobei an den Seitenrahmen (130) Stützen vorgesehen sind, die zum Abstützen der Seitenrahmen (130) vorgesehen und in ihrer Länge veränderbar sind.

9. Abrollcontainer nach einem der Ansprüche 1 bis 8, aufweisend eine Versorgungseinheit, die Komponenten zur Energieversorgung, Klimatisierung und Heizung aufweist, und eine Kontaktschnittstelle zur externen Energie-, Informations-, Stoff- und Wasserzufuhr.

10. Abrollcontainer nach einem der Ansprüche 1 bis 9, wobei die Dachrahmenteile (122, 124) an ihren freien Seiten jeweils Befestigungsmittel aufweisen, über welche Seitenwände und/oder Verbindungselemente angebracht werden können.

11. Abrollcontainer nach einem der Ansprüche 1 bis 10, wobei im Hauptrahmen (110), in den Seitenrahmen (130) und/oder Dachrahmenteilen (122, 124) Versorgungsleitungen zur Energieversorgung, Kommunikation und/oder Stoffversorgung angeordnet sind.

12. Abrollcontainer nach einem der Ansprüche 1 bis 11, wobei die Seitenrahmen (130) und/oder die Dachrahmenteile (122, 124) Querstreben (125) aufweisen.

13. Abrollcontainer nach einem der Ansprüche 1 bis 12, wobei an der Plattform (102) und/oder am Hauptrahmen (110) Stützen (140) angeordnet sind, die über mindestens ein viertes Antriebselement zur Verbreiterung der Auflage des Abrollcontainers (100) ausfahrbar oder rotierbar sind.

14. Abrollcontainer nach einem der Ansprüche 1 bis 13, aufweisend eine Steuerungseinheit, die mit den Antriebselementen über Mittel zum Betätigen der Antriebselemente verbunden ist, wobei die Steuerungseinheit eine Schnittstelle zur ferngesteuerten Bedienung der verstellbaren Seitenrahmen (130) und Dachrahmenteile (122, 124) aufweist.

15. Abrollcontainer nach Anspruch14, wobei die Schnittstelle eine kontaktlose Schnittstelle oder eine Schnittstelle mit einem physischen Kontakt ist.

16. System bestehend aus mindestens zwei Abrollcontainern (100) nach einem der Ansprüche 1 bis15, wobei zwischen den mindestens zwei Abrollcontainern (100) eine Verbindungsplane angeordnet ist, welche mit korrespondierenden Seiten der Dachrahmenteile (124) verbindbar ist, wobei die Verbindungsplane eine den entsprechenden Dachrahmenteilen (124) entsprechende Länge und eine über die Länge sich verändernde Breite aufweist, so dass in einer parallelen Anordnung der Dachrahmenteile (124) der mindestens zwei Abrollcontainer (100) eine Regenrinne über die Verbindungsplane bereitgestellt ist.

17. Gerätewagensystem, aufweisend ein Wechselladerfahrzeug und einen Abrollcontainer (100) nach einem der Ansprüche 1 bis 15.

18. Verwendung eines Abrollcontainers (100) nach einem der Ansprüche 1 bis 15 als Transportmittel, Behandlungscontainer, Intensivstation, Unfallhilfsstelle, Evakuierungsstation, Isolierstation, Dekontaminationsstation, Funk-Vermelde-Einheit, Küche, Versorgungsstation, Beobachtungsstation, Unterkunft und/oder Verbandsplatz.

## Claims

1. A roll-off container, comprising a main frame (110) which is arranged on a platform (102), wherein the roll-off container (100) has a rectangular base area and the platform (102) has grounding rollers (104) on its underside and a hook (106) pointing upwards with a cross strut (108) on a front face, wherein the main frame (110) has floor parts, side and roof parts, and wherein an at least two-part roof structure (120) is mounted rotatably at the upper end of the main frame (110) on both long sides, wherein the roof structure (120) has at least two rotatably mounted roof frame parts (122, 124), the width of which corresponds to the height of the side walls of the main frame (110) and the length of which corresponds to the length of the main frame (110), wherein a first roof frame part (122) is rotatably mounted on the main frame (110) and a second roof frame part (124) on the first roof frame part (122), wherein the first roof frame part (122) is displaceable via at least one first drive element and the second roof frame part (124) with the first roof frame part (122) via at least one second drive element, wherein side frames (130) are rotatably mounted on side struts (114) of the main frame (110) on both sides at a front end and a rear end of the main frame (110), wherein the side frames (130) have a height sloping towards the end starting from the connection point to the main frame (110), wherein the side frames (130) are rotatable via at least a third drive element, wherein an increase in the base area of the roll-off container (100) is providable in a usage position via the rotatably mounted side frames (130) and the roof structure (120), and wherein the rotatably mounted side frames (130) and the roof structure (120) are displaceable by remote-control.

2. The roll-off container according to claim 1, wherein the first roof frame parts (122) and/or the second roof frame parts (124) on their facing sides in their usage position, and/or the first roof frame parts (122) and/or the main frame (110) on their facing sides in their usage position, and/or the side frames (130) and/or the main frame (110) on the side struts (114) on their facing sides in their usage position, and/or the side frames (130) and/or the roof frame parts (122, 124) of the roof structure (120) on their facing sides in their usage position each comprise at least one gasket.

3. The roll-off container according to claim 1 or 2, wherein the first roof frame parts (122) and the second roof frame parts (124), and/or the first roof frame parts (122) and the main frame (110), and/or the side frames (130) and the main frame (110) are each connected to each other at the side struts (114) by at least one hinge (116, 117, 126, 128).

4. The roll-off container according to any one of claims 1 to 3, wherein a rotatably mounted roller, on which a floor tarpaulin is wound up so that it is unrollable, is arranged below the main frame (110) on both long sides.

5. The roll-off container according to claim 4, wherein the floor tarpaulin in the unrolled state in the usage position is connectable to the underside of the side frames (130).

6. The roll-off container according to any one of claims 1 to 5, wherein a tarpaulin protruding downwards is arranged on the undersides of the side frames (130) or is provided connectable thereto, wherein the tarpaulin has a section on its underside which is fillable in order to compensate for unevenness in relation to a sub-surface, to provide waterproofing and to weigh down the roll-off container (100) in addition for securing it.

7. The roll-off container according to any one of claims 1 to 6, wherein the main frame (110) has an overhang (111) on each of the long sides, on the underside whereof at least one gasket is arranged which, in the usage position, abuts against the respective first part of the roof frame part (122).

8. The roll-off container according to any one of claims 1 to 7, wherein struts are provided at the side frames (130), which are intended for supporting the side frames (130) and which are changeable in their length.

9. The roll-off container according to any one of claims 1 to 8, comprising a supply unit which has components for energy supply, air conditioning and heating, and a contact interface for external energy, information, material and water supply.

10. The roll-off container according to any one of claims 1 to 9, wherein the roof frame parts (122, 124) each comprise fasteners on their free sides, via which side walls and/or connecting elements can be fitted.

11. The roll-off container according to any one of claims 1 to 10, wherein supply lines for energy supply, communication and/or material supply are arranged in the main frame (110), in the side frame (130) and/or roof frame parts (122, 124).

12. The roll-off container according to any one of claims 1 to 11, wherein the side frames (130) and/or the roof frame parts (122, 124) comprise cross struts (125).

13. The roll-off container according to any one of claims 1 to 12, wherein struts (140) are arranged on the platform (102) and/or on the main frame (110), which are extendable or rotatable by at least a fourth drive element for widening the support of the roll-off container (100).

14. The roll-off container according to any one of claims 1 to 13, comprising a control unit, which is connected to the drive elements by means for actuating the drive elements, wherein the control unit comprises an interface for the remote-controlled operation of the adjustable side frames (130) and roof frame parts (122, 124).

15. The roll-off container according to claim 14, wherein the interface is a contactless interface or an interface with a physical contact.

16. A system consisting of at least two roll-off containers (100) according to any one of claims 1 to 15, wherein a connecting tarpaulin is arranged between the at least two roll-off containers (100), which are connectable to corresponding sides of the roof frame parts (124), wherein the connecting tarpaulin has a length corresponding to the corresponding roof frame parts (124) and a width varying over the length, so that a rain gutter is provided over the connecting tarpaulin in a parallel arrangement of the roof frame parts (124) of the at least two roll-off containers (100).

17. An equipment trolley system, comprising a swap body vehicle and a roll-off container (100) according to any one of claims 1 to 15.

18. A use of a roll-off container (100) according to any one of claims 1 to 15 as means of transport, handling container, intensive care unit, accident assistance station, evacuation station, isolation station, decontamination station, radio reporting unit, kitchen, supply station, observation station, accommodation and/or first aid station.

## Revendications

1. Conteneur roulant, comportant un cadre principal (110), qui est placé sur une plateforme (102), le conteneur roulant (100) comportant une surface de base rectangulaire et sur sa face inférieure, la plateforme (102) comportant des galets de pose (104) et sur sa face frontale, comportant un crochet (106) montrant vers le haut, doté d'une traverse (108), le cadre principal (110) comportant des parties de fond inférieur, des parties latérales et des parties de toit et sur l'extrémité supérieure du cadre principal (110) vers les deux côtés longitudinaux étant logée de manière rotative chaque fois une structure de toit (120) au moins en deux parties, la structure de toit (120) comportant au moins deux parties (122, 124) de cadre de toit logées de manière rotative, dont la largeur correspond à la hauteur des parois latérales du cadre principal (110) et dont la longueur correspond à la longueur du cadre principal (110), une première partie (122) de cadre de toit étant logée de manière rotative sur le cadre principal (110) et une deuxième partie (124) de cadre de toit étant logée de manière rotative sur la première partie (122) de cadre de toit, la première partie (122) de cadre de toit étant déplaçable par l'intermédiaire d'au moins une premier élément d'entraînement et la deuxième partie (124) de cadre de toit étant déplaçable avec la première partie (122) de cadre de toit, ainsi que par l'intermédiaire d'au moins un deuxième élément d'entraînement, sur des montants latéraux (114) du cadre principal (110), respectivement vers les deux côtés, sur une extrémité avant et une extrémité arrière du cadre principal (110) étant logés de manière rotative des cadres latéraux (130), en partant du point de raccordement sur le cadre principal (110), les cadres latéraux (130) présentant une hauteur déclinant en direction de l'extrémité les cadres latéraux (130) étant rotatifs par l'intermédiaire de chaque fois au moins un troisième élément d'entraînement, par l'intermédiaire des cadres latéraux (130) logés de manière rotative et de la structure de toit (120) pouvant être mis à disposition dans une position d'utilisation un agrandissement de la surface de base du conteneur roulant (100) et les cadres latéraux (130) logés de manière rotative et la structure de toit (120) étant déplaçables par télécommande.

2. Conteneur roulant selon la revendication 1,
sur leurs faces dirigées l'une vers l'autre dans la position d'utilisation, les premières parties (122) de cadre de toit et / ou les deuxièmes parties (124) de cadre de toit et / ou
sur leurs faces dirigées l'une vers l'autre dans la position d'utilisation, les premières parties (122) de cadre de toit et / ou le cadre principal (110) et / ou sur leurs faces dirigées l'une vers l'autre dans la position d'utilisation, les cadres latéraux (130) et / ou le cadre principal (110) sur les montants latéraux (114) et / ou
sur leurs faces dirigées l'une vers l'autre dans la position d'utilisation, les cadres latéraux (130) et ou les parties (122, 124) de cadre de toit de la structure de toit (120) comportant chaque fois au moins un joint.

3. Conteneur roulant selon la revendication 1 ou 2, les premières parties (122) de cadre de toit et les deuxièmes parties (124) de cadre de toit et / ou les premières parties (122) de cadre de toit et le cadre principal (110), et / ou
les cadres latéraux (130) et le cadre principal (110) sur les montants latéraux (114) étant assemblés les uns avec les autres chaque fois par l'intermédiaire d'au moins une charnière (116, 117, 126, 128).

4. Conteneur roulant selon l'une quelconque des revendications 1 à 3, sous le cadre principal (110), vers les deux côtés longitudinaux étant placé chaque fois un galet logé de manière rotative, sur lequel une bâche de sol est enroulée de manière déroulable.

5. Conteneur roulant selon la revendication 4, dans la position d'utilisation, lorsqu'elle est déroulée, la bâche de sol pouvant s'assembler avec la face inférieure des cadres latéraux (130).

6. Conteneur roulant selon l'une quelconque des revendications 1 à 5, sur les faces inférieures des cadres latéraux (130) étant placée chaque fois ou étant susceptible d'être assemblée avec celui-ci une bâche saillant vers le bas, sur sa face inférieure, la bâche comportant une portion pouvant se remplir, pour compenser des aspérités par rapport à un sol, pour assurer l'étanchéité et pour lester additionnement le conteneur roulant (100) pour le sécuriser.

7. Conteneur roulant selon l'une quelconque des revendications 1 à 6, le cadre principal (110) comportant sur les côtés longitudinaux chaque fois un surplomb (111), sur la face inférieure duquel est placé au moins un joint, qui dans la position d'utilisation est adjacent à la première partie (122) de cadre de toit respective.

8. Conteneur roulant selon l'une quelconque des revendications 1 à 7, sur les cadres latéraux (130) étant prévus des supports, qui sont prévus pour soutenir les cadres latéraux (130) et dont la longueur est variable.

9. Conteneur roulant selon l'une quelconque des revendications 1 à 8, comportant une unité d'alimentation, qui comporte des composants pour l'alimentation en énergie, la climatisation et le chauffage et une interface de contact, pour l'amenage externe d'énergie, d'informations, de matières et d'eau.

10. Conteneur roulant selon l'une quelconque des revendications 1 à 9, sur leurs faces libres, les parties (122, 124) de cadre de toit comportant chaque fois des moyens de fixation, par l'intermédiaire desquels des parois latérales et / ou des éléments d'assemblage peuvent être montés.

11. Conteneur roulant selon l'une quelconque des revendications 1 à 10, dans le cadre principal (110), dans les cadres latéraux (130) et / ou dans les parties (122, 124) de cadre de toit étant placées des conduites d'alimentation, pour l'alimentation en énergie, la communication et / ou pour l'alimentation en matières.

12. Conteneur roulant selon l'une quelconque des revendications 1 à 11, les cadres latéraux (130) et / ou les parties (122, 124) de cadre de toit comportant des traverses (125).

13. Conteneur roulant selon l'une quelconque des revendications 1 à 12, sur la plateforme (102) et / ou sur le cadre principal (110) étant placés des supports (140) qui sont extractibles ou rotatifs par l'intermédiaire d'au moins un quatrième élément d'entraînement, pour élargir la surface de pose du conteneur roulant (100).

14. Conteneur roulant selon l'une quelconque des revendications 1 à 13, comportant une unité de commande, qui est assemblée avec les éléments d'entraînement par l'intermédiaire de moyens pour actionner les éléments d'entraînement, l'unité de commande comportant une interface pour la commande à distance des cadres latéraux (130) et des parties (122, 124) de cadre de toit ajustables.

15. Conteneur roulant selon la revendication 14, l'interface étant une interface sans contact ou une interface avec un contact physique.

16. Système, consistant dans au moins deux conteneurs roulants {100) selon l'une quelconque des revendications 1 à 15, entre les au moins deux conteneurs roulants (100) étant placée une bâche d'assemblage, susceptible d'être assemblée avec des faces correspondantes des parties (124) de cadre de toit, la bâche d'assemblage présentant une longueur correspondant aux parties (124) de cadre de toit correspondantes et une largeur variable sur la longueur, de telle sorte que lorsque les parties (124) de cadre de toit des au moins deux conteneurs roulants sont placées à la parallèle (100), une gouttière soit mise à disposition par l'intermédiaire de la bâche d'assemblage.

17. Système de véhicules d'intervention, comportant un véhicule porteur de cellules et un conteneur roulant (100) selon l'une quelconque des revendications 1 à 15.

18. Utilisation d'un conteneur roulant (100) selon l'une quelconque des revendications 1 à 15 en tant que moyen de transport, de conteneur de soins, d'unité de soins intensifs, de poste de secours, de poste d'évacuation, de poste d'isolement, de poste de décontamination, d'unité de signalisation radio, de cuisine, de poste d'approvisionnement, de poste d'observation, d'hébergement et / ou de poste de premiers secours.
